(19) Europäisches Patentamt / European Patent Office / Office européen des brevets

(11) **EP 4 425 973 B1**

(12) **EUROPEAN PATENT SPECIFICATION**

(45) Date of publication and mention
of the grant of the patent:
**24.06.2026 Bulletin 2026/26**

(21) Application number: **22887638.9**

(22) Date of filing: **27.10.2022**

(51) International Patent Classification (IPC):
*H04W 4/40* (2018.01)    *H04W 4/12* (2009.01)
*H04W 4/02* (2018.01)    *H04W 28/02* (2009.01)
*H04W 88/18* (2009.01)    *H04L 51/214* (2022.01)
*H04L 51/58* (2022.01)    *H04W 76/14* (2018.01)

(52) Cooperative Patent Classification (CPC):
H04W 28/02; H04L 51/226; H04L 51/58;
H04W 4/02; H04W 4/12; H04W 4/40;
H04W 28/0236; H04W 28/0268

(86) International application number:
**PCT/KR2022/016557**

(87) International publication number:
**WO 2023/075443 (04.05.2023 Gazette 2023/18)**

(54) **METHOD AND DEVICE FOR TRANSMITTING AND RECEIVING WIRELESS SIGNAL IN WIRELESS COMMUNICATION SYSTEM**

VERFAHREN UND VORRICHTUNG ZUM SENDEN UND EMPFANGEN EINES DRAHTLOSSIGNALS IN EINEM DRAHTLOSKOMMUNIKATIONSSYSTEM

PROCÉDÉ ET DISPOSITIF POUR TRANSMETTRE ET RECEVOIR UN SIGNAL SANS FIL DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **27.10.2021 KR 20210144860**

(43) Date of publication of application:
**04.09.2024 Bulletin 2024/36**

(73) Proprietor: **LG Electronics Inc.**
**Yeongdeungpo-gu**
**Seoul 07336 (KR)**

(72) Inventors:
• **HWANG, Jaeho**
  **Seoul 06772 (KR)**
• **SONG, Min**
  **Seoul 06772 (KR)**
• **KIM, Hakseong**
  **Seoul 06772 (KR)**
• **SEO, Hanbyul**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(56) References cited:
**WO-A1-2019/177729    WO-A1-2021/014411**
**WO-A1-2021/014411    US-A1- 2017 164 070**
**US-A1- 2020 259 935    US-A1- 2021 051 653**

• **QUALCOMM INCORPORATED: "Fairness support in IAB topology", 3GPP TSG RAN WG2 MEETING #113BIS-E, R2-2103081, 2 April 2021 (2021-04-02), XP052174593**
• **ZTE, SANECHIPS: "Discussion on topology-wide fairness, multi-hop latency and congestion mitigation", 3GPP TSG RAN WG2 MEETING #113BIS-E, R2-2103138, 2 April 2021 (2021-04-02), XP052174751**

## Description

### TECHNICAL FIELD

The present disclosure relates to a wireless communication system, and more particularly to a method and apparatus for transmitting and receiving a wireless signal.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface (interface between User Equipment and Radio Network System).

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

US 2020/259935 A1 relates to a payload configuration indicating a header structure comprising a header extension flag, HEF, field, extension type fields.

US 2017/164070 A1 relates to a payload configuration indicating a header structure comprising a header extension flag, HEF, field, extension type fields.

WO 2021/014411 A1 relates to device-to device communications, HEF and QoS priority.

### DISCLOSURE

### TECHNICAL PROBLEM

The present disclosure aims to provide a method and apparatus for facilitating Quality of Service (QoS) management based on QoS priority levels of a user equipment (UE).

The present disclosure provides a method of efficiently performing a procedure of transmitting and receiving a wireless signal and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

The invention is disclosed according to the appended claims.

### TECHNICAL SOLUTION

In a proposed embodiment, provided herein is an operation method for a first device in a wireless communication system. The method may include: transmitting configuration information for direct device-to-device communication to a second device; and receiving a message including a header and a payload from the second device. The header may include an extension flag field including a plurality of bits and extension data fields, each of which corresponds to a data type identified by the extension flag field. A transmission period of a message related to the second device may be adjusted based on information on a Quality of Service (QoS) level of the second device included in the header.

In a proposed embodiment, provided herein is a first device configured to operate in a wireless communication system. The first device may include: at least one radio frequency (RF) unit; at least one processor; and at least one computer memory operably connected to the at least one processor and configured to, when executed, cause the at least one processor to perform operations. The operations may include: transmitting configuration information for direct device-to-device communication to a second device; and receiving a message including a header and a payload from the second device. The header may include an extension flag field including a plurality of bits and extension data fields, each of which corresponds to a data type identified by the extension flag field. A transmission period of a message related to the second device may be adjusted based on information on a QoS level of the second device included in the header.

In a proposed embodiment, provided herein is an operation method for a second device in a wireless communication system. The method may include: receiving configuration information for direct device-to-device communication from a first device; and transmitting a message including a header and a payload to the first device. The header may include an extension flag field including a plurality of bits and extension data fields, each of which corresponds to a data type identified by the extension flag field. A transmission period of a message related to the second device is adjusted based on information on a QoS level of the second device included in the header.

In a proposed embodiment, provided herein is a second device configured to operate in a wireless communication system. The second device may include: at least one RF unit; at least one processor; and at least one computer memory operably connected to the at least one processor and configured to, when executed, cause the at least one processor to perform operations. The operations may include: receiving configuration information for direct device-to-device communication from a first device; and transmitting a message including a header and a payload to the first device. The header may include an extension flag field including a plurality of bits and extension data fields, each of which corresponds to a data type identified by the extension flag field. A transmission period of a message related to the second device is adjusted based on information on a QoS level of the second device included in the header.

In a proposed embodiment, provided herein is a device configured to operate in a wireless communication system. The device may include: at least one processor; and at least one computer memory operably connected to the at least one processor and configured to, when executed, cause the at least one processor to perform operations. The operations may include: transmitting configuration information for direct device-to-device communication to a second device; and receiving a message including a header and a payload from the second device. The header may include an extension flag field including a plurality of bits and extension data fields, each of which corresponds to a data type identified by the extension flag field, and a transmission period of a message related to the second device is adjusted based on information on a Quality of Service (QoS) level of the second device included in the header.

In a proposed embodiment, provided herein is a computer-readable storage medium including at least one computer program configured to, when executed, cause at least one processor to perform operations. The operations may include: transmitting configuration information for direct device-to-device communication to a second device; and receiving a message including a header and a payload from the second device. The header may include an extension flag field including a plurality of bits and extension data fields, each of which corresponds to a data type identified by the extension flag field. A transmission period of a message related to the second device may be adjusted based on information on a QoS level of the second device included in the header.

According to an embodiment, the QoS level of the second device may be determined based on at least one of a risk level of a zone in which the second device is located, a distance from the second device to a road, or an intensity of a signal generated in a vicinity of the second device.

According to an embodiment, the risk level of the zone in which the second device is located may be determined based on a predetermined priority map. The priority map may include information on a plurality of zones divided based on at least one of a number of driving vehicles and a frequency of occurrence of accidents.

According to an embodiment, one or more thresholds may be configured based on the distance to the road, and the QoS level of the second device may be determined based on a result of comparing the one or more thresholds with the distance from the second device to the road.

According to an embodiment, the intensity of the signal generated in the vicinity of the second device may include at least one of an intensity of a voice signal in a frequency band generated in a vehicle or an intensity of a radio signal in a frequency band used in the device-to-device communication.

According to an embodiment, the QoS level of the second device may be determined based on a result of comparing the intensity of the signal with one or more predetermined thresholds.

According to an embodiment, the QoS level of the second device may include one level among a plurality of levels depending on the risk level.

According to an embodiment, one bit among the plurality of bits may be a bit for identifying a presence of the information on the QoS level of the second device, and an extension data field corresponding to the one bit may indicate a value of the QoS level of the second device.

According to an embodiment, the information on the QoS level of the second device may be obtained based on the header without decoding the payload.

According to an embodiment, a transmission period of a message transmitted from the first device to the second device may be adjusted based on the information on the QoS level of the second device.

According to an embodiment, a transmission period of a message transmitted from the second device to the first device may be adjusted based on the information on the QoS level of the second device.

According to an embodiment, the method may further include transmitting information for adjusting the transmission period of the message to the second device.

According to an embodiment, the method may further include: checking a QoS status of a network; and transmitting a threshold level for adjusting the transmission period of the message to the second device based on the QoS status of the network being lower than or equal to a predetermined level.

According to an embodiment, the first device may include a server configured to control the device-to-device communication, and the second device may include a user equipment (UE) configured to perform the device-to-device communication.

According to an embodiment, the header may further include an additional extension flag field, and the flag field may further include a bit indicating a presence of the additional extension flag field.

## ADVANTAGEOUS EFFECTS

According to proposed embodiments, a Quality of Service (QoS) priority level of a user equipment (UE) may be checked from the header of a message without decoding the payload of the message.

According to the proposed embodiments, QoS management may be facilitated based on the QoS priority level of the UE.

According to the proposed embodiments, the load of a network may be reduced by adjusting at least one of downlink or uplink transmission based on the QoS priority level of the UE.

Effects to be achieved by embodiment(s) are not limited to what has been particularly described hereinabove and other effects not mentioned herein will be more clearly understood by persons skilled in the art to which embodiment(s) pertain from the following detailed description.

## BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure.

FIG. 1 is a diagram for explaining by comparing V2X communication based on RAT before NR and V2X communication based on NR.

FIG. 2 illustrates the structure of an LTE system to which embodiment(s) are applicable

FIG. 3 illustrates the structure of an NR system to which embodiment(s) are applicable.

FIG. 4 illustrates the structure of an NR radio frame to which embodiment(s) are applicable.

FIG. 5 illustrates the slot structure of an NR frame to which embodiment(s) are applicable.

FIG. 6 illustrates a radio protocol architecture for SL communication.

FIG. 7 illustrates UEs performing V2X or SL communication.

FIG. 8 illustrates resource units for V2X or SL communication.

FIG. 9 is a diagram for explaining an ITS station reference architecture.

FIG. 10 illustrates an example of structure of an ITS station that may be designed and applied based on a reference architecture.

FIG. 11 is a diagram illustrating an example to which proposed methods are applicable.

FIG. 12 is a diagram illustrating the configurations of a UE and a server according to the proposed methods

FIG. 13 illustrates the structure of a message according to a proposed embodiment.

FIG. 14 is a diagram illustrating an example in which a predetermined priority map is configured.

FIG. 15 is a diagram illustrating an example in which a QoS priority is determined based on the distance from a UE to a road.

FIG. 16 is a diagram illustrating an example in which a QoS priority is determined based on the intensity of a signal generated from a vehicle

FIG. 17 is a diagram illustrating an example of generating a message (or V2X message) including a QoS priority level.

FIG. 18 is a diagram illustrating a method of controlling the period of a message transmitted to a server based on the QoS priority level of a UE.

FIG. 19 is a diagram illustrating a flow of messages according to the proposed methods.

FIG. 20 is a diagram illustrating a method by which a server adjusts the transmission period of a message based on the QoS priority level of a UE.

FIG. 21 illustrates a flow of messages according to the proposed methods.

FIG. 22 is a flowchart illustrating operations of a first device according to a proposed embodiment.

FIG. 23 is a flowchart illustrating operations of a second device according to a proposed embodiment.

FIG. 24 illustrates a communication system applied to the present disclosure.

FIG. 25 illustrates wireless devices applicable to the present disclosure.

FIG. 26 illustrates another example of a wireless device to which the present disclosure is applied.

FIG. 27 illustrates a vehicle or an autonomous driving vehicle applied to the present disclosure.

## DETAILED DESCRIPTION

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP(3rd generation partnership project) LTE(long term evolution) is a part of Evolved UMTS (E-UMTS) using E-UTRA. 3GPP LTE adopts OFDMA on downlink (DL) and adopts SC-FDMA on uplink (UL). LTE-advanced (LTE-A) is an evolved version of 3GPP LTE.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the embodiment(s) is not limited thereto.

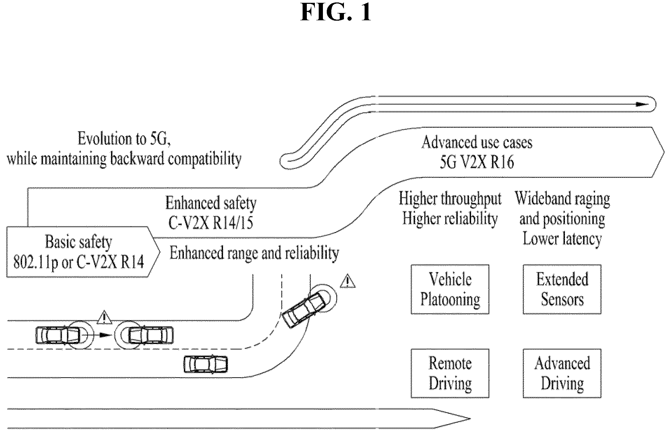

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic status information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

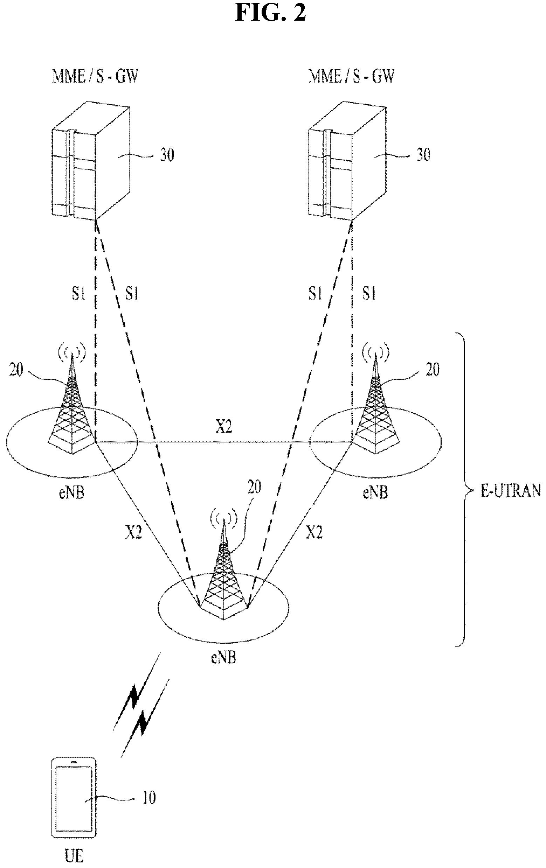

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes a base station (BS) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An BS 20 is a fixed station communication with the UE 10 and may also be referred to as an evolved-NodeB (eNB), a base transceiver system (BTS), or an access point.

BS 20 may be connected to each other via an X2 interface. A BS 20 is connected to an evolved packet core (EPC) 39 via an S1 interface. More specifically, the BS 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and a BS.

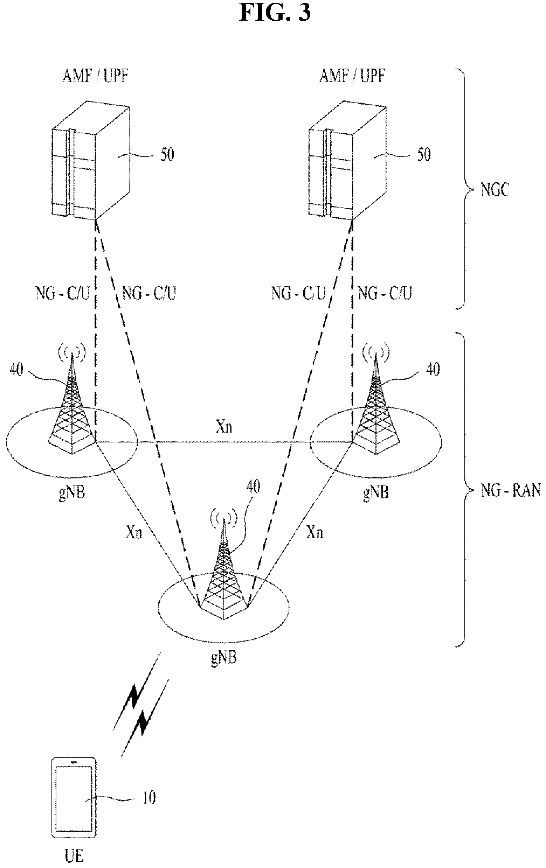

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

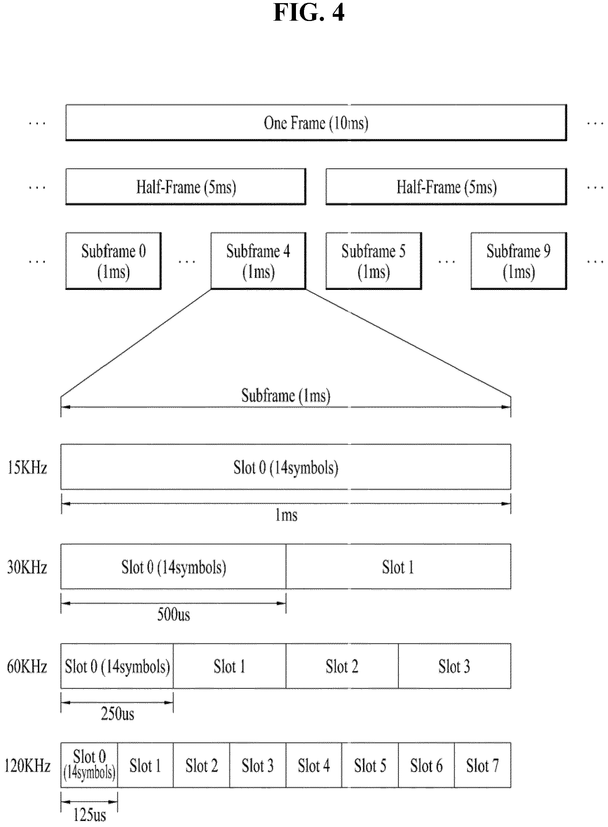

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS ($15*2^u$) | $N^{slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

[Table 2]

| SCS ($15*2^u$) | $N^{slot}_{symb}$ | $N^{frame,u}_{slot}$ | $N^{subframe,u}_{slot}$ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description). In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

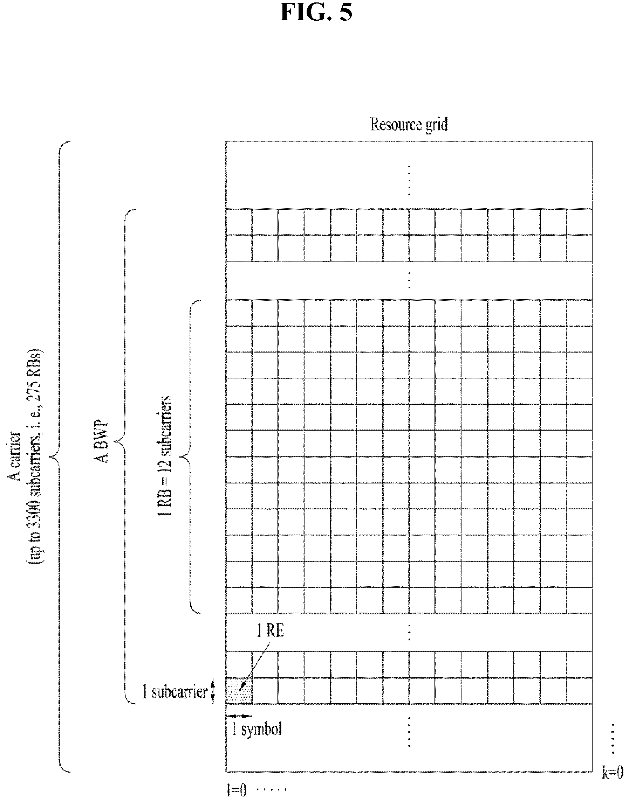

FIG. 5 illustrates the slot structure of a NR frame to which the present disclosure is applicable. Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

Hereinafter, V2X or sidelink (SL) communication will be described.

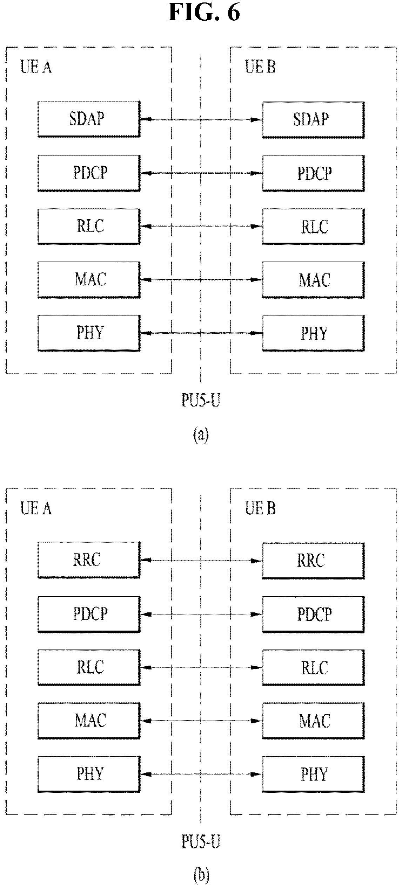

FIG. 6 illustrates a radio protocol architecture for SL communication. Specifically, FIG. 6-(a) shows a user plane protocol stack of NR, and FIG. 6-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

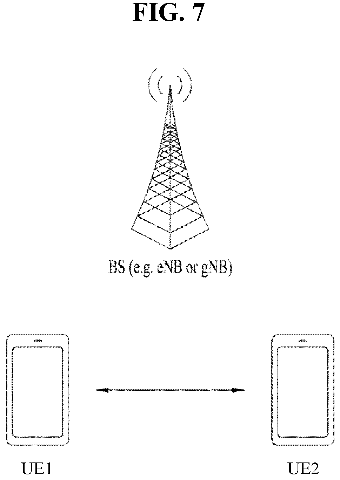

FIG. 7 illustrates UEs performing V2X or SL communication.

Referring to FIG. 7, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

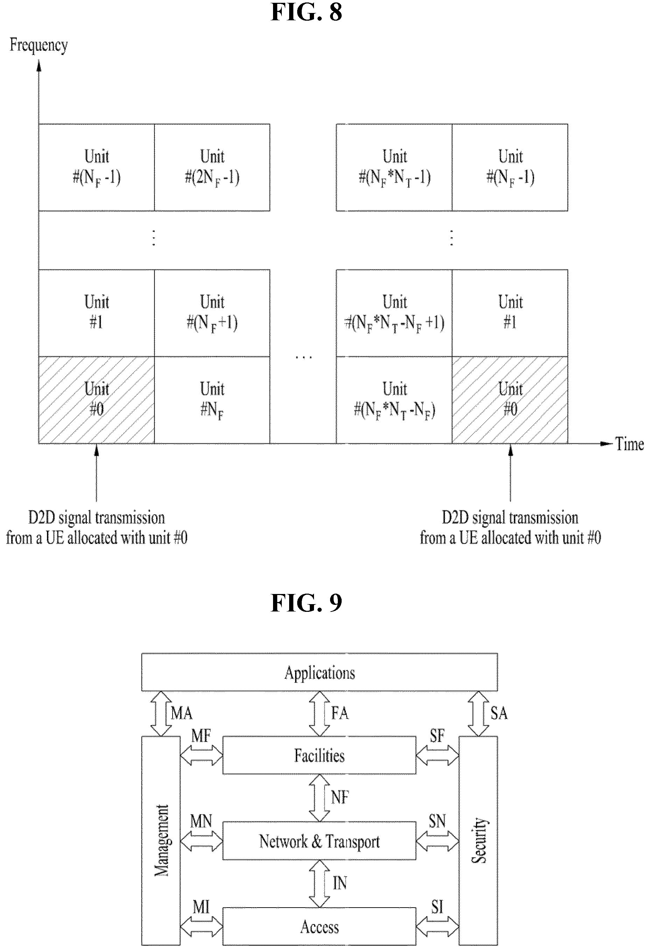

FIG. 8 illustrates resource units for V2X or SL communication.

Referring to FIG. 8, the frequency resources of a resource pool may be divided into NF sets, and the time resources of the resource pool may be divided into NT sets. Accordingly, a total of NF * NT resource units may be defined in the resource pool. FIG. 8 shows an exemplary case where the resource pool is repeated with a periodicity of NT subframes.

As shown in FIG. 8, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.

(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.

(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

## Vehicular Communications for ITS

An intelligent transport system (ITS) utilizing vehicle-to-everything (V2X) may mainly include an access layer, a network & transport layer, a facilities layer, an application layer, security and management entities, etc. Vehicle communication may be applied to various scenarios such as vehicle-to-vehicle communication (V2V), vehicle-to-network communication (V2N or N2V), vehicle-to-road side unit (RSU) communication (V2I or I2V), RSU-to-RSU communication (I2I), vehicle-to-pedestrian communication (V2P or P2V), and RSU-to-pedestrian communication (I2P or P2I). A vehicle, a BS, an RSU, a pedestrian, etc. as the subjects of vehicle communication are referred to as intelligent transport system (ITS) stations.

FIG. 9 is a diagram for explaining an ITS station reference architecture.

The ITS station reference architecture may include an access layer, a network & transport layer, a facilities layer, entities for security and management, and an application layer at the top. Basically, the ITS station reference architecture follows a layered OSI model.

Specifically, features of the ITS station reference architecture based on the OSI model are illustrated in FIG. 9. The access layer of the ITS station corresponds to OSI layer 1 (physical layer) and layer 2 (data link layer), the network & transport layer of the ITS station corresponds to OSI layer 3 (network layer) and layer 4 (transport layer), and the facilities layer of the ITS station corresponds to OSI layer 5 (session layer), layer 6 (presentation layer), and layer 7 (application layer).

The application layer, which is located at the highest layer of the ITS station, may actually implement and support a use-case and may be selectively used according to the use-case. The management entity serves to manage all layers in addition to managing communication and operations of the ITS station. The security entity provides security services for all layers. Each layer of the ITS station exchanges data transmitted or received through vehicle communication and additional information for various purposes through an interface. The abbreviations of various interfaces are described below.

MA: Interface between management entity and application layer
MF: Interface between management entity and facilities layer
MN: Interface between management entity and networking & transport layer
MI: Interface between management entity and access layer
FA: Interface between facilities layer and ITS-S applications
NF: Interface between networking & transport layer and facilities layer
IN: Interface between access layer and networking & transport layer
SA: Interface between security entity and ITS-S applications
SF: Interface between security entity and facilities layer

SN: Interface between security entity and networking & transport layer
SI: Interface between security entity and access layer

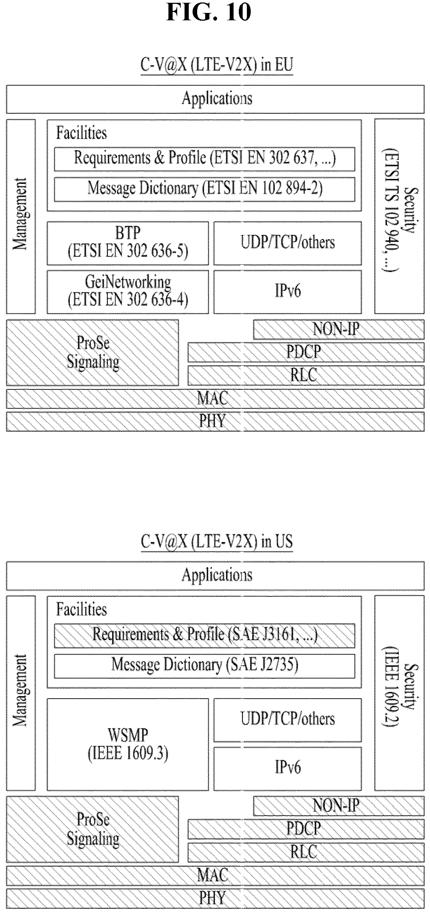

FIG. 10 illustrates an example of structure of an ITS station that may be designed and applied based on a reference architecture.

A main concept of the ITS station reference architecture is to allow each layer with a special function to process communication on a layer basis, between two end vehicles/users included in a communication network. That is, when a V2V message is generated, the data is passed through each layer downwards layer by layer in the vehicle and the ITS system (or other ITS-related UEs/systems), and a vehicle or ITS system (or other ITS-related UEs/systems) receiving the message passes the message upwards layer by layer.

The ITS system operating through vehicle communication and the network was organically designed in consideration of various access technologies, network protocols, communication interfaces, etc. to support various use-cases, and the roles and functions of each layer described below may be changed depending on a situation. The main functions of each layer will be briefly described.

The application layer actually implements and supports various use-cases. For example, the application layer provides security, efficient traffic information, and other entertainment information.

The application layer controls an ITS station to which an application belongs in various manners or provides services by transferring a service message to an end vehicle/user/infrastructure through the access layer, the network & transport layer, and the facilities layer, which are lower layers of the application layer, by vehicle communication. In this case, the ITS application may support various use-cases. In general, these use-cases may be supported by grouping into other applications such as road-safety, traffic efficiency, local services, and infotainment. Application classification, use-cases, etc. may be updated when a new application scenario is defined. Layer management serves to manage and service information related to operation and security of the application layer, and the related information is transmitted and shared bidirectionally through an MA and an SA (or service access point (SAP), e.g., MA-SAP or SA-SAP). A request from the application layer to the facilities layer or a service message and related information from the facilities layer to the application layer may be delivered through an FA.

The facilities layer serves to support effective implementation of various use-cases defined in an application layer of a higher layer. For example, the facilities layer may perform application support, information support, and session/-communication support.

The facilities layer basically supports the 3 higher layers of the OSI model, for example, a session layer, a presentation layer, and the application layer, and functions. Specifically, the facilities layer provides facilities such as application support, information support, and session/communication support, for the ITS. Here, the facilities mean components that provide functionality, information, and data.

The application support facilities support the operation of ITS applications (mainly generation of a message for the ITS, transmission and reception of the message to and from a lower layer, and management of the message). The application support facilities include a cooperative awareness (CA) basic service and a decentralized environmental notification (DEN) basic service. In the future, facilities entities for new services such as cooperative adaptive cruise control (CACC), platooning, a vulnerable roadside user (VRU), and a collective perception service (CPS), and related messages may be additionally defined.

The information support facilities provide common data information or a database to be used by various ITS applications and includes a local dynamic map (LDM).

The session/communication support facilities provide services for communications and session management and include an addressing mode and session support.

Facilities may be divided into common facilities and domain facilities.

The common facilities are facilities that provide common services or functions required for various ITS applications and ITS station operations, such as time management, position management, and service management.

The domain facilities are facilities that provide special services or functions required only for some (one or more) ITS applications, such as a DEN basic service for road hazard warning applications (RHW). The domain facilities are optional functions and are not used unless supported by the ITS station.

Layer management serves to manage and service information related to the operation and security of the facilities layer, and the related information is transmitted and shared bidirectionally through an MF and an SF (or MF-SAP and SF-SAP). The transfer of service messages and related information from the application layer to the facilities layer or from the facilities layer to the application layer is performed through an FA (or FA-SAP), and bidirectional service messages and related information between the facilities layer and the lower networking & transport layer are transmitted by an NF (or NF-SAP).

The network & transport layer servers to configure a network for vehicle communication between homogenous or heterogeneous networks through support of various transport protocols and network protocols. For example, the network & transport layer may provide Internet access, routing, and vehicle networking using Internet protocols such as TCP/UDP+IPv6 and form a vehicle network using a basic transport protocol (BTP) and GeoNetworking-based protocols. In this case, networking using geographic position information may also be supported. A vehicle network layer may be designed or configured depending on technology used for the access layer (access layer technology-independently) or regardless of the technology used for the access layer (access layer technology-independently or access layer technology agnostically).

Functionalities of the European ITS network & transport layer are as follows. Basically, functionalities of the ITS network & transport layer are similar to or identical to those of OSI layer 3 (network layer) and layer 4 (transport layer) and have the following characteristics.

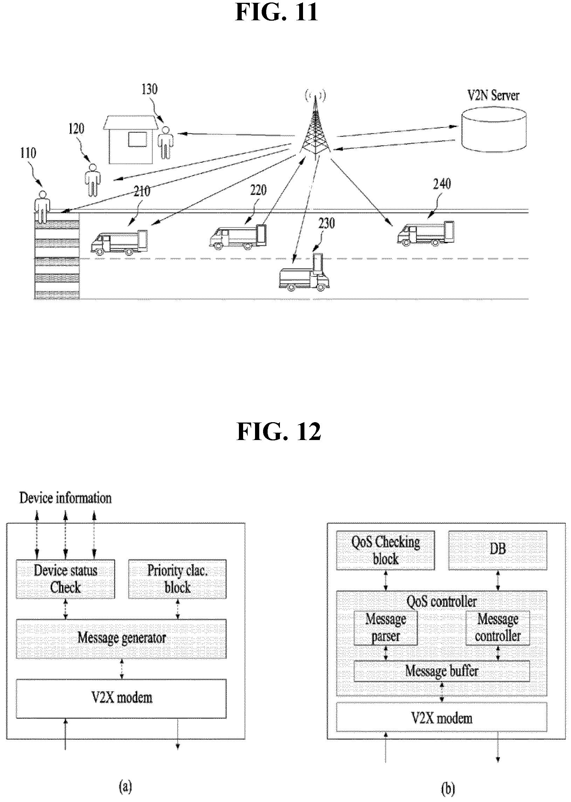

The transport layer is a connection layer that delivers service messages and related information received from higher layers (the session layer, the presentation layer, and the application layer) and lower layers (the network layer, the data link layer, and the physical layer). The transport layer serves to manage data transmitted by an application of the ITS station so that the data accurately arrives at an application process of the ITS station as a destination. Transport protocols that may be considered in European ITS include, for example, TCP and UDP used as legacy Internet protocols as illustrated in FIG.11, and there are transport protocols only for the ITS, such as the BTS.

The network layer serves to determine a logical address and a packet forwarding method/path and add information such as the logical address of a destination and the forwarding path/method to a header of the network layer in a packet received from the transport layer. As an example of the packet method, unicast, broadcast, and multicast between ITS stations may be considered. Various networking protocols for the ITS may be considered, such as GeoNetworking, IPv6 networking with mobility support, and IPv6 over GeoNetworking. In addition to simple packet transmission, the GeoNetworking protocol may apply various forwarding paths or transmission ranges, such as forwarding using position information about stations including vehicles or forwarding using the number of forwarding hops.

Layer management related to the network & transport layer serves to manage and provide information related to the operation and security of the network & transport layer, and the related information is transmitted and shared bidirectionally through an MN (or MN-SAP) and an SN (or SN-SAP). Transmission of bidirectional service messages and related information between the facilities layer and the networking & transport layer is performed by an NF (or NF-SAP), and service messages and related information between the networking & transport layer and the access layer are exchanged by an IN (or IN-SAP).

A North American ITS network & transport layer supports IPv6 and TCP/UDP to support existing IP data like Europe, and a wave short message protocol (WSMP) is defined as a protocol only for the ITS.

A packet structure of a wave short message (WSM) generated according to the WSMP includes a WSMP header and WSM data carrying a message. The WSMP header includes Version, PSID, WSMP header extension fields, WSM WAVE element ID, and Length.

Version is defined by a WsmpVersion field indicating an actual WSMP version of 4 bits and a reserved field of 4 bits. PSID is a provider service identifier, which is allocated according to an application in a higher layer and helps a receiver to determine an appropriate higher layer. Extension fields is a field for extending the WSMP header, and includes information such as a channel number, a data rate, and transmit power used. WSMP WAVE element ID specifies the type of a WSM to be transmitted. Length specifies the length of transmitted WSM data in octets through a WSMLength field of 12 bits, and the remaining 4 bits are reserved. LLC Header allows IP data and WSMP data to be transmitted separately and is distinguished by Ethertype of a SNAP. The structures of the LLC header and the SNAP header are defined in IEEE802.2. When IP data is transmitted, Ethertype is set to 0x86DD in the LLC header. When WSMP is transmitted, Ethertype is set to 0x88DC in the LLC header. The receiver identifies Ethertype. If Ethertype is 0x86DD, the receiver transmits upward the packet to an IP data path, and if Ethertype is 0x88DC, the receiver transmits upward the packet to a WSMP path.

The access layer serves to transmit a message or data received from a higher layer on a physical channel. As access layer technologies, ITS-G5 vehicle communication technology based on IEEE 802.11p, satellite/broadband wireless mobile communication technology, 2G/3G/4G (long-term evolution (LTE), etc.)/5G wireless cellular communication technology, cellular-V2X vehicle-dedicated communication technologies such as LTE-V2X and NR-V2X (new radio), broadband terrestrial digital broadcasting technology such as DVB-T/T2/ATSC3.0, and GPS technology may be applied.

A data link layer is a layer that converts a physical line between adjacent nodes (or between vehicles) with noise into a communication channel without transmission error, for use in the higher network layer. The data link layer performs a function of transmitting/delivering/forwarding L3 protocols, a framing function of dividing data to be transmitted into packets (or frames) as transmission units and grouping the packets, a flow control function of compensating for a speed difference between a transmitter and a receiver, and a function of (because there is a high probability that an error and noise occurs randomly in view of the nature of a physical transmission medium) detecting a transmission error and correcting the error or detecting a transmission error based on a timer and an ACK signal by a transmitter in a method such as automatic repeat request (ACK) and retransmitting a packet that has not been correctly received. In addition, to avoid confusion between packets or ACK signals, the data link layer performs a function of assigning a sequence number to the packets and the ACK signals, and a function of controlling establishment, maintenance, and disconnection of a data link between network entities, and data transmission between network entities. The main functions of logical link control (LLC), radio resource control (RRC), packet data convergence protocol (PDCP), radio link control (RLC), medium access control (MAC), and multi-channel operation (MCO) included in the data link layer of FIG. 11 will be described below.

An LLC sub-layer enables the use of different lower MAC sub-layer protocols, and thus enables communication regardless of network topology. An RRC sub-layer performs functions such as broadcasting of cell system information required for all UEs within a cell, management of delivery of paging messages, management (setup/maintenance/release) of RRC connection between a UE and an E-UTRAN, mobility management (handover), transmission of UE context between eNodeBs during handover, UE measurement reporting and control therefor, UE capability management, temporary assignment of a cell ID to a UE, security management including key management, and RRC message encryption. A PDCP sub-layer may performs functions such as IP packet header compression in a compression method such as robust header compression (ROHC), cyphering of a control message and user data, data integrity, and data loss prevention during handover. RLC sub-layer delivers a packet received from the higher PDCP layer in an allowed size of the MAC layer through packet segmentation/concatenation, increases data transmission reliability by transmission error and retransmission management, checks the order of received data, reorders data, and checks redundancy. A MAC sub-layer performs functions such as control of the occurrence of collision/contention between nodes for use of shared media among multiple nodes, matching a packet delivered from the higher layer to a physical layer frame format, assignment and identification of the address of the transmitter/receiver, detection of a carrier, collision detection, and detection of obstacles on the physical medium. An MCO sub-layer enables efficient provision of various services on a plurality of frequency channels. The main function of MCO sub-layer is to effectively distribute traffic load of a specific frequency channel to other channels to minimize collision/contention of communication information between vehicles in each frequency channel.

The physical layer is the lowest layer in the ITS layer architecture. The physical layer defines an interface between a node and a transmission medium and performs modulation, coding, and mapping of a transport channel to a physical channel, for bit transmission between data link layer entities and informs the MAC sub-layer of whether a wireless medium is busy or idle by carrier sensing or clear channel assessment (CCA).

A soft V2X system may be a system in which a soft V2X server receives a VRU message or a personal safety message (PSM) from a vulnerable road user (VRU) or a V2X vehicle and transfers information on a neighbor VRU or vehicle based on the VRU message or the PSM message or may analyze a road condition, etc. on which neighbor VRUs or vehicles move and may transmit a message informing a neighbor VRU or vehicle of a collision warning, etc. based on the analyzed information (e.g., through a downlink signal) via V2X communication using a UU interface. Here, the VRU message may be a message transmitted to the soft V2X server through the UU interface, and may include mobility information about the VRU, such as a position, a movement direction, a movement path, and a speed of the VRU. That is, the soft V2X system may use a method of receiving mobility information of VRUs and/or vehicles related to V2X communication through the UU interface and controlling a driving route or a VRU movement flow of the VRU, etc. based on the mobility information received by the softV2X server, such as a network. The soft V2X system may be configured in relation to V2N communication.

User equipment or pedestrian equipment (VRU device) that is difficult to perform direct communication (PC5, DSRC) related to V2X communication can provide or receive driving information and mobility information to nearby vehicles or VRUs through the soft V2X system based on the UU interface. Through this, the user equipment or pedestrian equipment (VRU device) that is difficult to perform the direct communication (PC5, DSRC) can be protected from surrounding vehicles.

When providing V2N services, the server (e.g., V2N server) processes messages and transmits the messages to UEs (e.g., V2X UEs). However, as the number of UEs increases, the network capacity may become insufficient, or the server processing power may become insufficient. Therefore, there is a need to control the flow of messages from UEs through Quality of Service (QoS) management.

Hereinafter, methods of defining QoS levels at a UE and message structures capable of handling the defined QoS levels without decoding will be described to allow a server to process messages transmitted from the UE. In addition, methods of managing QoS in UL and managing QoS in DL based on defined QoS levels will be also described.

FIG. 11 is a diagram illustrating an example to which the proposed methods are applicable. Referring to FIG. 11, a message transmitted from a UE 220 may be transmitted to all neighboring UEs 210, 230, and 240 through a server. In this case, each of the UEs 210, 220, 230, 240 may refer to a V2X UE or V2X device, and each of the UEs 210, 220, 230, and 240 may be a UE installed on a vehicle or a UE carried by a user riding in a vehicle. In addition, messages from vulnerable road users (VRUs) are also transmitted as is to neighboring UEs. The messages from the VRUs may be messages transmitted from VRU devices. The VRU devices may refer to devices possessed by the VRUs, but the present disclosure are not limited thereto. If the number of UEs increases, the amount of messages transmitted and received may exceed the capacity of the network or the message processing ability of the server, which may lead to disruptions in V2N services. Therefore, to prevent the aforementioned issues, QoS management at the server may be necessary. For example, the QoS level for a VRU 130 with a relatively low risk level such as someone sitting on a bench in a cafe or park should be different from that of a pedestrian 110 crossing a crosswalk. According to the proposed methods, the UE may determine QoS priorities thereof, and the server (or V2N server) may manage the QoS based on the QoS priorities of each UE. For the proposed methods, both the UE and server may include additional blocks for QoS processing. Herein, the UE may refer to a device, V2X UE, V2X device, soft V2X UE, or soft V2X device, and the aforementioned terms may be used interchangeably. In addition, the server may refer to a V2N server or soft V2X server, and the aforementioned terms may be used interchangeably. Furthermore, the QoS level may be referred to as a QoS priority or QoS priority level, and the aforementioned terms may be used interchangeably.

FIG. 12 is a diagram illustrating the configurations of a UE and a server according to the proposed methods. Referring to FIG. 12, the UE may include a block for calculating QoS priorities (i.e., a priority calculation block). The QoS priorities may serve as necessary information for the server to manage the QoS. For instance, the QoS priorities may include a plurality of levels based on risk levels. For example, the plurality of levels included in the QoS priorities may include Level 1 indicating a high-risk zone, Level 2 indicating a risk zone, Level 3 indicating a low-risk zone, and Level 4 indicating a zero-risk zone. However, the present disclosure is not limited thereto. The UE may receive status information through a status check block. The priority calculation block of the UE may calculate the QoS priorities of the UE based on the state information received through the state check block. The priority calculation block may calculate the QoS priorities based on the three methods proposed below, but the present disclosure is not limited thereto. The values of the calculated QoS priorities may be included in a V2N message with the proposed structure, and the V2N message may be transmitted to the server (via a V2X modem).

Referring to FIG. 12, the server may further include a QoS controller. For example, the server may forward a V2X message received from the UE to the QoS controller. The QoS controller temporarily stores the received message in a message buffer and extracts information about a QoS priority from the V2X message through a message parser. The QoS controller controls transmission (or forwarding) of the V2X message based on the status of the server calculated by a QoS checking block. Accordingly, the server may manage not only messages to be processed but also the QoS of the network. While FIG. 12 shows that the server includes the QoS controller and QoS checking block, but the operations of the QoS controller and QoS checking block may not be distinguished from each other and could be performed by one or more processors.

Hereinafter, a dedicated V2N message for handling V2N messages will be described. In addition, a method of managing the QoS based on the proposed dedicated V2N message will be also described.

The V2N service allows the UE and server to communicate based on message queuing telemetry transport (MQTT) technology. The UE periodically reports the location and status thereof to the server based on the MQTT technology. For example, the UE periodically generates and publishes a message including information on the status thereof. Publishing a message by the UE may including uploading by the UE the message to the server. In this case, the transmission period of the message may be determined based on the type and service quality of the V2N service. The server may forward the messages published by the UE to other UEs. UEs enrolled in the V2N service may subscribe to topics corresponding to their areas of interest and receive messages published within the corresponding areas of interest from the server.

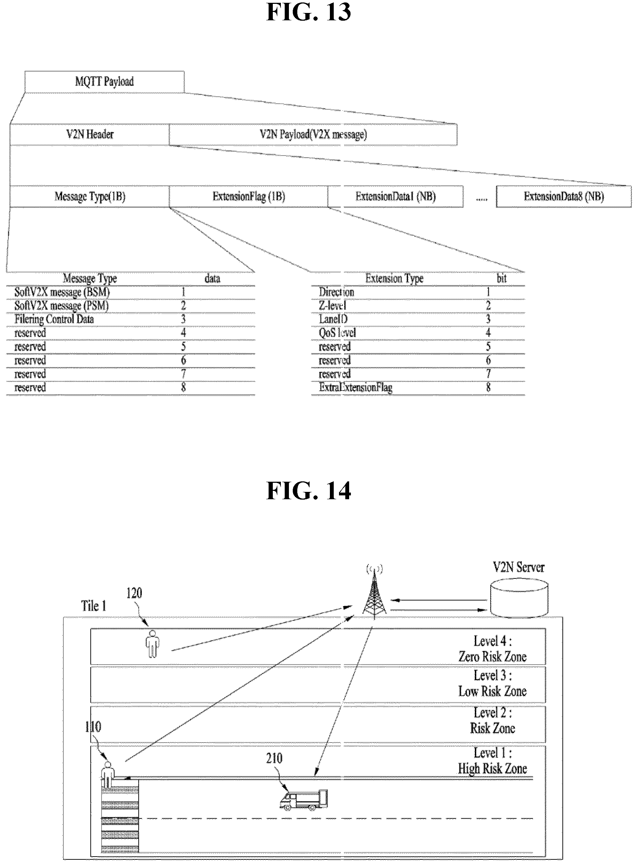

FIG. 13 illustrates the structure of a message according to a proposed embodiment. Referring to FIG. 13, a V2X message may be encapsulated (or encoded) and transmitted for additional functions, instead of being transmitted directly through the payload (e.g., MQTT payload) of the lower layer. A V2N message consists of a V2N header and a V2N payload, and the encoded V2X message is transmitted through the V2N payload. The V2N header may include the following fields: Message Type indicating the type of V2X message, Extension Flag for extension, and Extension Data corresponding to a flag.

When the UE uploads a message to the server, the message type may be a soft V2X message (basic safety message (BSM)). In this case, information about QoS priority levels of the UE may be transmitted through an extension field (i.e., an extension flag field and an extension data field). For example, the extension flag field may be composed of 8 bits as shown in FIG. 13, but the present disclosure is not limited thereto. Each bit may be a bit for identifying different types of data indicated through the extension data field. For example, referring to FIG. 13, the fourth bit of the extension flag field may be a bit for identifying the QoS priority levels (or QoS levels) of the UE. Accordingly, when the information about the QoS priority levels of the UE is included in the extension field, the value of the bit (i.e., the fourth bit) of the "QoS level" type corresponding to the QoS priority levels is set to 1 in the extension flag field. The QoS priority levels of the UE may be included in the extension data field corresponding to the "QoS level" type. Further, referring to FIG. 13, the last bit (or eighth bit) of the extension flag field may be a bit indicating whether there is an additional extension flag field. For example, if the extension filed includes more than 8 data types, an additional extension flag field may be required. Accordingly, when the last bit value of the extension flag field is set to 1, an additional extension flag field may be created. Data types included in the extension field may be added based on the additional extension flag field. To calculate the QoS priority levels of the UE, methods of distinguishing the QoS priority levels of the UE will be described in detail.

According to a proposed embodiment, QoS priorities may be determined based on a predetermined priority map. FIG. 14 is a diagram illustrating an example in which a predetermined priority map is configured. Referring to FIG. 14, a plurality of zones may be configured based on at least one of the number of driving vehicles and the frequency of occurrence of accidents. The plurality of zones may mean zones with different priorities. For example, the plurality of zones may include a high-risk zone, a risk zone, a low-risk zone, and a zero-risk zone, and the priority levels corresponding to each of the high-risk zone, the risk zone, the low-risk zone, and the zero-risk zone may be expressed as Levels 1 to 4. However, the present disclosure is not limited thereto. Alternatively, depending on the embodiment, a plurality of priority levels may be represented as a high-risk zone, a risk zone, a low-risk zone, and a zero-risk zone. For example, the priority level of a VRU 110 located in an area adjacent to crosswalks may be set to "high-risk area" (or "Level 1"), while the priority level of a VRU 120 located in a park next to roads may be set to "zero-risk zone" (or "Level 4").

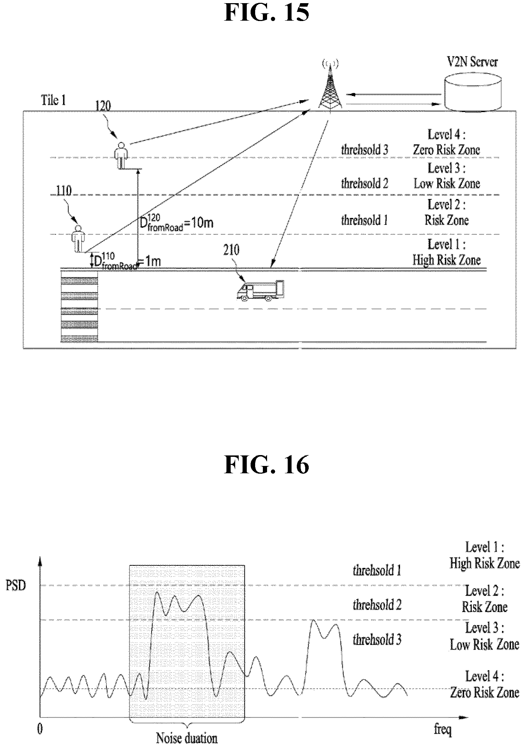

According to a proposed embodiment, QoS priorities may be determined based on the distance between the road and the UE. FIG. 15 is a diagram illustrating an example in which a QoS priority is determined based on the distance from a UE to a road. Referring to FIG. 15, one or more thresholds based on a distance from the road may be used to determine the QoS priorities. For example, as shown in FIG. 15, when the distance ( $= D_{fromRoad}^{110}$ ) between the road and a UE (or VRU) 110 is about 1 m, the UE 110 may compare $D_{fromRoad}^{110}$ with a first threshold (= threshold 1). If $D_{fromRoad}^{110}$ is less than or equal to the first threshold (or less than the first threshold), the priority level of the UE 110 may be determined (or set) as a "high-risk zone (or Level 1)." In addition, if the distance ( $D_{fromRoad}^{120}$ ) between the road and a UE (or VRU) 120 is about 10 m, the UE 120 may determine the priority level of the UE 120 based on the result of comparing $D_{fromRoad}^{120}$ with a second threshold (= threshold 2) and a third threshold (= threshold 3). Since $D_{fromRoad}^{120}$ is a value between the second threshold and the third threshold, the priority level of the UE 120 may be determined as "low-risk zone (or Level 3)".

According to a proposed embodiment, QoS priorities may be determined based on the intensity of a signal generated from a vehicle. For example, the signal generated from the vehicle may be noise in a specific band generated by the vehicle, or the signal may be a signal in a frequency band used in direct communication between devices. The intensity of the signal generated from the vehicle may include the intensity of noise input through a microphone. In this case, the microphone may refer to the microphone of the UE (or device) mounted on the vehicle or the microphone of the UE possessed by a user inside the vehicle. However, the present disclosure is not limited thereto. If there is a high volume of communication in the frequency band where messages are transmitted, the intensity of a signal in the frequency band may be strong. A high level of noise input through the microphone or a high volume of communication in the frequency band where messages are transmitted may indicate a large number of vehicles passing through the vicinity, and the presence of numerous passing vehicles may imply a relatively high level of risk.

FIG. 16 is a diagram illustrating an example in which a QoS priority is determined based on the intensity of a signal generated from a vehicle. Referring to FIG. 16, to determine the QoS priority based on the intensity of the signal generated from the vehicle, one or more thresholds (e.g., first to third thresholds) based on the intensity of the signal generated from the vehicle may be configured. The UE may compare the power of a signal generated in a specific frequency band (e.g., a frequency band corresponding to a noise duration in FIG. 16) among signals generated from the UE (or vehicle) with a predetermined threshold. Referring to FIG. 16, since the power of the signal generated in the specific frequency band is a value between a first threshold and a second threshold, the UE may determine the QoS priority level of the UE as "risk zone (or Level 2)" based on the comparison result.

According to the proposed methods, the UE may transmit the determined (or calculated) QoS priority level to the server based on an extension field included in the header of a message. The UE may generate the message to be transmitted to the server through the message generation block (or message generator) shown in FIG. 12. However, the present disclosure is not limited thereto. For example, in FIG. 2, the message generation block is shown as a separate block. Depending on the embodiment, a message may be generated through one or more processors included in the UE.

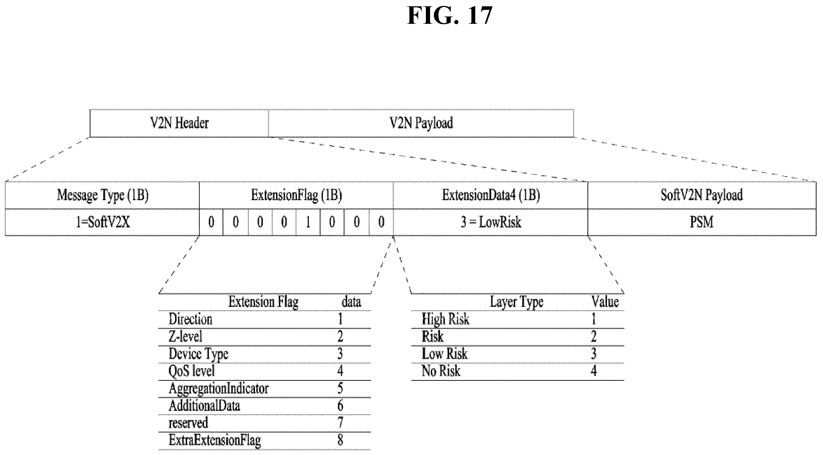

FIG. 17 is a diagram illustrating an example of generating a message (or V2X message) including a QoS priority level. Referring to FIG. 17, when generating a message including a QoS priority level, the UE may set a bit indicating the QoS priority level (or QoS level) among a plurality of bits of an extension flag field to 1. Then, the UE may create an extension data field corresponding to the QoS priority level. The extension data field may be set to a value indicating the QoS priority level of the UE. For example, if the QoS priority level of the UE is "low-risk zone (or Level 3)", the value of the extension data field may be set to 3. When a message containing an extension field is transmitted to the server, the server can check the QoS priority level of the UE based on the extension field included in the header of the message without decoding the message because the extension field is included in the header of the message.

Typically, the UE may publish a message containing information on the status thereof according to a predetermined transmission period, regardless of the QoS priority level, and the server may directly forward status information on UEs to the UEs subscribed to receive the information. However, according to a proposed embodiment, if it is determined that QoS management is required based on at least one of the network situation and the processing capability of the server, the server may perform the QoS management.

According to a proposed embodiment, the server (or soft V2X server) may check the QoS status. The server may check the QoS status through the QoS checking block in FIG. 12, but the present disclosure is not limited thereto. To consistently provide seamless V2N services, the server continuously monitors the status of the network and/or the processing load of the server. If the status of network is poor or the processing load of the server exceeds a predetermined threshold, it becomes difficult to provide seamless V2N services, and degradation in the quality of V2N services may occur. To prevent such degradation in the service quality, the server may utilize at least one of a UL QoS management method and a DL QoS management method to provide V2N services above a certain level. For example, the UL QoS management method involves managing the QoS while the UE performs UL transmission processes if the network status is poor or the CPU load of the server exceeds a predetermined threshold. In other words, the UL QoS management method may mean managing the QoS by adjusting the amount of messages (i.e., UL messages) transmitted from the UE to the server. Similarly, the DL QoS management method may mean managing the QoS by adjusting the amount of messages (i.e., DL messages) transmitted from the server to the UE.

According to an embodiment, if the network status is poor, the server may use the UL QoS to reduce the amount of messages transmitted to the server, thereby reducing the volume of traffic that could impact the network quality. The server may check the status of the network using a timestamp field included in the header of a message (e.g., the V2N header in FIG. 13). For example, based on the difference between the value of the timestamp field when the UE transmits the message and the time when the server receives the message, it may be determined whether a message transmission error or message retransmission has occurred. In this case, if the time difference is more than or equal to a predetermined level, the server may transmit a QoS status and threshold to the UE to reduce the amount of traffic transmitted from the UE to the server.

In addition, if the load of the server increases, the delay in messages transmitted to the UE in DL may increase, leading to degradation in the quality of V2N services. In this case, the server may reduce the amount of DL messages using the DL QoS and thus alleviate the server load. As a result, message latency decreases, enabling the maintenance of the quality of V2N services above a predetermined threshold. For instance, the server may assess the load level thereof by periodically monitoring the CPU load of the server. If the CPU load of the server exceeds a predetermined threshold, the server may transmit the QoS status and threshold to the UE to reduce the amount of DL traffic and alleviate the CPU load of the server.

According to a proposed implementation, the server may control transmission and reception of messages by measuring the QoS status. Specifically, the server may control message transmission based on the QoS priority level of a message received from the UE. In this case, the message transmission may be controlled according to the following method: UL QoS management or DL QoS management.

The QoS controller controls the transmission and reception of messages based on the QoS status measured by the server. For example, the QoS controller may control the transmission and reception of messages based on the QoS priority level of a message received from the UE. In this case, the message transmission and reception may be controlled according to the following method: UL QoS management or DL QoS management, but the present disclosure is not limited to these methods.

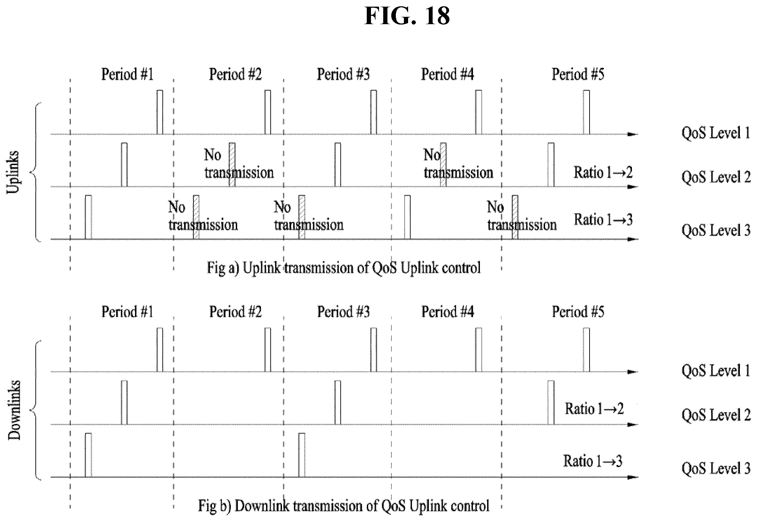

As described above, the UL QoS management method may refer to a method of managing the QoS while the UE performs UL transmission when the status of the server or network is poor. FIG. 18 is a diagram illustrating a method of controlling the period of a message transmitted to a server based on the QoS priority level of a UE. Referring to Figure 18, when the QoS priority level of the UE is set to "Level 1," the UE may transmit a message to the server based on a predetermined period. However, if the QoS priority level of the UE is set to "Level 2" or "Level 3," the transmission periods of messages may increase to twice or three times the predetermined period, respectively. Accordingly, the loads of the network and server may be reduced by adjusting the transmission period of UL messages based on QoS priority levels. However, the UL QoS management method may have a drawback of message loss at the UE.

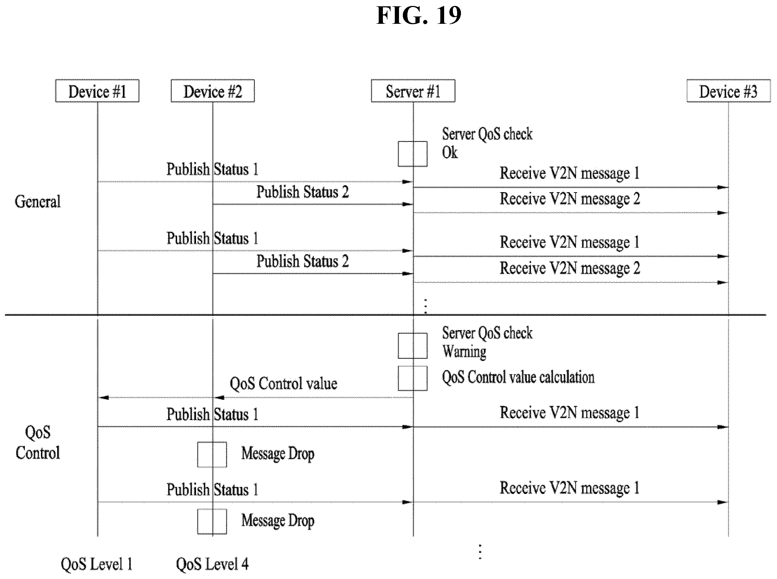

FIG. 19 is a diagram illustrating a flow of messages according to the proposed methods. A server may continuously monitor not only the status thereof but also the status of a network while providing V2N services. In situations where the server needs to manage the QoS, the server may provide information about a QoS status and threshold to UEs. The threshold may refer to a threshold for QoS priority levels required for UEs to transmit messages. The UE may control UL transmission based on the threshold received from the server and the QoS priority level of the UE. Referring to FIG. 19, in typical situations where no QoS management is required, a first UE and a second UE publish messages containing status information based on predetermined periods. The server may then forward the messages from the first UE and the second UE to a third UE. However, if the server determines that QoS management is necessary after checking the QoS, the server may transmit QoS control information to the first UE and the second UE. In this case, the QoS control information (or QoS control value) may represent the threshold of the QoS priority levels required for UEs to publish messages. Upon receiving the QoS control information, the first UE and the second UE may determine whether to publish messages based on a comparison between the received QoS control information and the QoS priority levels thereof. For example, if the QoS priority level of the first UE is "Level 1," the first UE may publish a message, while if the QoS priority level of the second UE is "Level 4," the second UE may drop a message, instead of publishing the message. Consequently, the server may only forward the message published by the first UE to the third UE. As a result, the quantity of messages (or UL messages) transmitted to the server is adjusted, enabling the management of the QoS of the network and server.

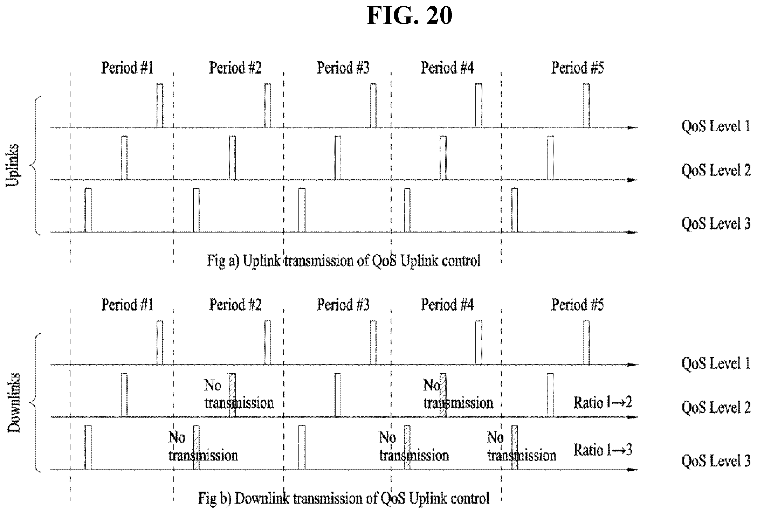

In some embodiments, the DL QoS management method may be applied. The DL QoS management method refers to managing the QoS during the DL transmission process of the server when the status of the server or network is poor. FIG. 20 is a diagram illustrating a method by which a server adjusts the transmission period of a message based on the QoS priority level of a UE. Referring to FIG. 20, for UL transmission, UEs may transmit messages to the server based on a predetermined period, regardless of QoS priority levels. The server may adjust the transmission period of messages based on the QoS priority level of the UE, and thus, the server may drop some of the received messages. Referring to FIG. 20, when the QoS priority level of the UE is "Level 1," the server may transmit a message according to the predetermined period. However, if the QoS priority level of the UE is "Level 2" or "Level 3," the server may increase the predetermined period to twice or three times, respectively, and then forward the messages. According to the DL QoS management method, the server may reduce the amount of messages transmitted to the UE, thereby reducing the load on the network and server. While the DL QoS management method may not alleviate the UL load of the network, the DL QoS management method has the advantage of minimizing message loss because the server receives all messages. Accordingly, the server may promptly recover message transmission based on the status of the network and server. In addition, the server may also process dropped messages and transmit additional information to the UE.

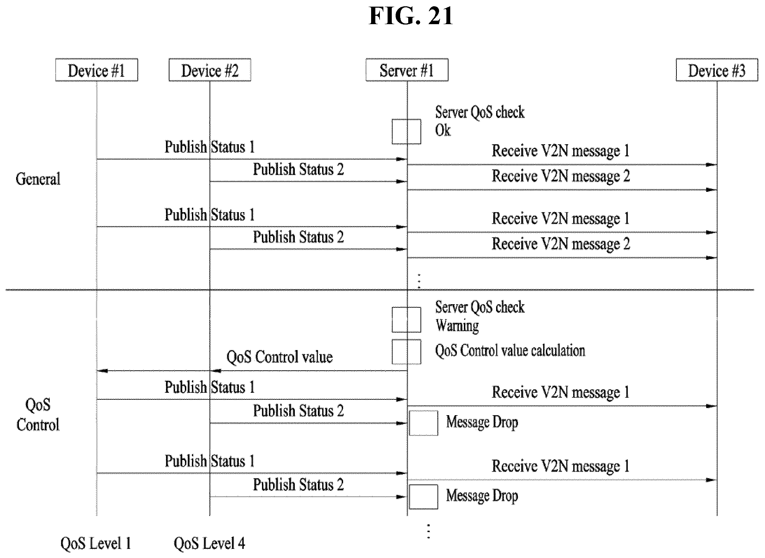

FIG. 21 illustrates a flow of messages according to the proposed methods. Referring to FIG. 21, in typical situations where no QoS management is required, a first UE and a second UE may publish messages containing status information based on a predetermined period. A server may then forward the messages published by the first UE and the second UE to a third UE. In this case, while providing services, the server may continuously check not only the status (QoS) thereof but also the status of a network. If the server determines that QoS management is necessary after checking the QoS, the server may transmit information on a QoS status and threshold to each UE. The UE may upload messages based on the received threshold and the QoS priority level thereof. Subsequently, the server may control message transmission based on the QoS priority level of the UE. Referring to FIG. 21, the server may transmit a message from the first UE whose QoS level is "Level 1" according to a predetermined period, while the server may not transmit a message from the second UE whose QoS priority level is "Level 4". Consequently, the QoS of the network and server may be managed by adjusting the quantity of messages transmitted from the server.

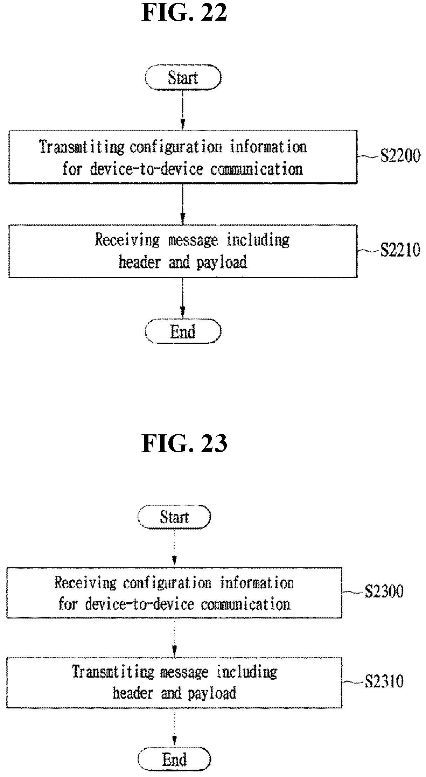

FIG. 22 is a flowchart illustrating operations of a first device according to a proposed embodiment.

According to an embodiment, a first device may transmit configuration information on direct communication between devices to a second device (S2200). For example, the first device may include the above-described server (e.g., V2N server, V2X server, or Soft V2X server), and the second device may include the above-described UE (e.g., V2X device, V2N device, or Soft V2X device). For instance, the first device may transmit the configuration information to the second device to provide V2N services. For example, the second device may connect to the first device, perform a subscription procedure for a topic of interest of the second device, and receive configuration information related to the subscription procedure. In this case, the second device may set a topic corresponding to an area where the second device is located as the topic of interest and subscribe to the topic. The second device may receive messages published for the topic of interest by performing the subscription procedure for the topic.

In addition, the first device may receive a message including a header and a payload from the second device (S2210). In this case, the message may correspond to the V2N message described above. The header of the message may correspond to the V2N header shown in FIG. 13, and the payload of the message may correspond to the V2N payload shown in FIG. 13. The header may include an extension flag field containing a plurality of bits and an extension data field corresponding to each data type identified by the extension flag field. In this case, the extension flag field and the extension data field may be simply referred to as an extension field. The extension flag field is used to identify the data types included in the extension data field. Each bit in the extension flag field may represent a different data type. Thus, the extension flag field may represent each data type with one-bit information. The data type identified by the extension flag field may include a QoS level of the second device. That is, one of the plurality of bits in the extension flag field may identify the presence of information on the QoS level of the second device, and the extension data field corresponding to the one bit may represent the value of the QoS level of the second device. For example, as shown in FIG. 17, if the extension field (including the extension flag field and extension data field) includes the information on the QoS level of the second device, the fourth bit of the extension flag field may be set to 1. The extension data field corresponding to the fourth bit may include the value of the QoS level of the second device.

According to a proposed embodiment, the transmission period of a message related to the second device may be adjusted based on the information on the QoS level of the second device included in the header. The QoS level of the second device may include one of a plurality of levels based on the level of risk. The QoS level of the second device may be determined based on at least one of the following: the level of risk in an area where the second device is located, the distance from the second device to a road, and the intensity of signals generated in the vicinity of the second device. For example, the level of risk in the area where the second device is located may be determined based on a predetermined priority map, which may contain information about a plurality of zones divided based on at least one of the following: the number of vehicles traveling in the area and the frequency of occurrence of accidents. For example, as shown in FIG. 14, a zone adjacent to crosswalks may be classified as "high-risk zone" because there are a relatively large number of driving vehicles. Therefore, it may be necessary to set a high QoS level for the second device passing through the area adjacent to crosswalks. On the other hand, in the case of a park, since there are no vehicles passing within the park and the frequency of occurrence of accidents is low, the park may be classified as a "zero-risk zone," and the QoS level of a VRU walking in the park may be set relatively low. In addition, according to a proposed embodiment, one or more thresholds may be configured based on the distance from the road. Based on a result of comparing the one or more thresholds with the distance between the second device and the road, the QoS level of the second device may be determined. For example, as shown in FIG. 15, first to third thresholds may be configured based on the distance from the road, but the present disclosure is not limited thereto. In this case, the closer the distance to the road, the higher the QoS level needs to be configured. For example, as shown in FIG. 15, if the distance between the road and a VRU holding the second device is less than or equal to (or less than) the first threshold, it implies that the VRU is walking adjacent to the road. Therefore, the QoS level may be set relatively high. For example, as shown in FIG. 15, if the distance between the second device and the road is less than or equal to the first threshold, the QoS level of the second device may set to "high-risk zone". If the distance between the second device and the road is between the first threshold and the second threshold, the QoS level of the second device may set to "low-risk zone." If the distance between the second device and the road is more than the third threshold, the QoS level of the second device may set to "zero-risk zone." However, the present disclosure is not limited to the above-described example.

According to a proposed embodiment, the intensity of signals generated in the vicinity of the second device may include at least one of the following: the intensity of voice signals in frequency bands generated by vehicles, or the intensity of radio signals in frequency bands used for device-to-device communication. A high intensity of voice signals in frequency bands generated by vehicles may mean that a large number of vehicles travel through the area. Similarly, a high intensity of radio signals in frequency bands used for device-to-device communication may mean that there are a large number of vehicles or pedestrians. Accordingly, based on a comparison of the intensity of voice signals in frequency bands generated by vehicles or the intensity of radio signals in frequency bands used for device-to-device communication with a predetermined threshold, the QoS level may be set higher as the intensity of the signal increases.

According to a proposed embodiment, the transmission period of messages related to the second device may be adjusted based on the information on the QoS level of the second device. For instance, the transmission period of messages related to the second device may include the transmission period of messages transmitted from the second device to the first device or the transmission period of messages transmitted from the first device to the second device. Transmission of messages from the second device to the first device may correspond to UL transmission. Accordingly, adjusting the transmission period of messages from the second device to the first device may correspond to the above-described UL QoS management method. Transmission of messages from the first device to the second device may correspond to DL transmission. Therefore, adjusting the transmission period of messages from the first device to the second device may correspond to the above-described DL QoS management method. If the QoS level of the second device is high, messages transmitted to or from the second device may be transmitted according to a predetermined period. However, if the QoS level of the second device is low, the transmission period of messages related to the second device may increase. Whether the transmission period increases or not may be determined based on one or more predetermined threshold levels. For example, if the QoS level of the second device corresponds to "low-risk zone," the transmission period of messages related to the second device may be adjusted to twice the predetermined period, and if the QoS level of the second device corresponds to the "zero-risk zone," the transmission period of messages related to the second device may be adjusted to three times the predetermined period. However, the present disclosure is not limited thereto.

FIG. 23 is a flowchart illustrating operations of a second device according to a proposed embodiment.

Referring to FIG. 23, according to an embodiment, a second device may receive configuration information on direct device-to-device communication from a first device (S2300). For example, the second device may receive configuration information for providing V2N services from the first device. The second device may connect to the first device to perform a subscription procedure for the topic of interest thereof and receive configuration information related to the subscription procedure. In this case, the second device may set a topic corresponding to a zone where the second device is located to the topic of interest and subscribe to the topic, thereby receiving messages published for the topic of interest.

The second device may transmit a message including a header and a payload to the first device (S2310). The header may include an extension flag field including a plurality of bits and an extension data field corresponding to each data type identified by the extension flag field. In this case, the extension flag field and extension data field may be collectively referred to as an extension field. The extension flag field may be used to identify the data type included in the extension data field. Each of the plurality of bits included in the extension flag field may represent a different data type. That is, the extension flag field may represent each data type as one-bit information. The data type identified in the extension flag field may include the QoS level of the second device. That is, one of the plurality of bits included in the extension flag field may identify whether there is information on the QoS level of the second device, and the extension data field corresponding to one bit may represent the value of the QoS level of the second device.

According to a proposed embodiment, the transmission period of messages related to the second device may be adjusted based on the information on the QoS level of the second device included in the header. The QoS level of the second device may be determined based on at least one of the following: the risk level of a zone where the second device is located, the distance from the second device to a road, and the intensity of signals generated in the vicinity of the second device. For instance, the level of risk of the zone where the second device is located may be determined based on a predetermined priority map, which may include information on a plurality of zones divided based on at least one of the following: the number of vehicles traveling in the zone and the frequency of occurrence of accidents. According to a proposed embodiment, one or more thresholds may be configured based on the distance from the road, and the QoS level of the second device may be determined based on a comparison between the thresholds and the distance between the second device and the road. According to a proposed embodiment, the intensity of signals generated in the vicinity of the second device may include at least one of the following: the intensity of voice signals in frequency bands generated by vehicles or the intensity of radio signals in frequency bands used for device-to-device communication.

According to a proposed embodiment, the transmission period of messages related to the second device may be adjusted based on the information on the QoS level of the second device. For example, the transmission period of messages related to the second device may include the transmission period of messages from the second device to the first device or the transmission period of messages from the first device to the second device. Transmission of messages from the second device to the first device corresponds to UL transmission as described above. Therefore, adjusting the transmission period of messages from the second device to the first device may correspond to the above-described UL QoS management method. In addition, transmission of messages from the first device to the second device corresponds to DL transmission as described above. Therefore, adjusting the transmission period of messages from the first device to the second device corresponds to the above-described DL QoS management method. If the QoS level of the second device is high, messages transmitted to or from the second device may be transmitted according to a predetermined period. However, if the QoS level of the second device is low, the transmission period of messages related to the second device may increase. Whether the transmission period increases or not may be determined based on one or more predetermined thresholds.

Hereinafter, a device to which various embodiments of the present disclosure may be applied will be described.

Although not limited thereto, various descriptions, functions, procedures, proposals, methods, and/or operational flow charts disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

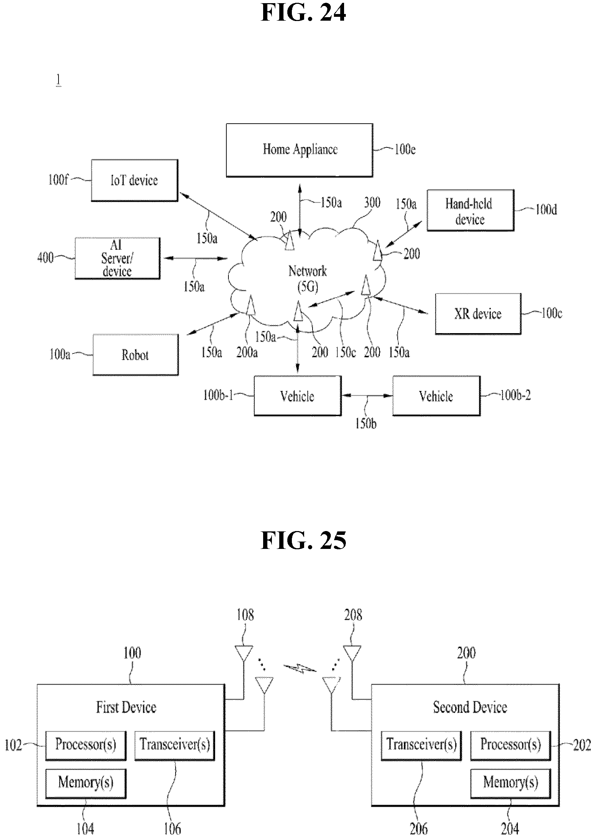

FIG. 24 illustrates a communication system 1 applied to the present disclosure.

Referring to FIG. 24, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 25 illustrates a wireless device applicable to the present disclosure.

Referring to FIG. 25, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 24.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

In the present specification, at least one memory (e.g., 104 or 204) may store instructions or programs, and the instructions or the programs may, when executed by at least one processor, cause the at least one processor operably connected to the at least one memory to perform operations according to some embodiments or implements of the present specification.

In the present specification, a computer-readable storage medium may store at least one instruction or computer program, and the at least one instruction or computer program may, when executed by at least one processor, cause the at least one processor to perform operations according to some embodiments or implements of the present specification.

In the present specification, a processing device or apparatus may include at least one processor and at least one memory to be connected to the at least one processor. The at least one computer memory may store instructions or programs, and the instructions or the programs may, when executed by at least one processor, cause the at least one processor operably connected to the at least one memory to perform operations according to some embodiments or implements of the present specification.

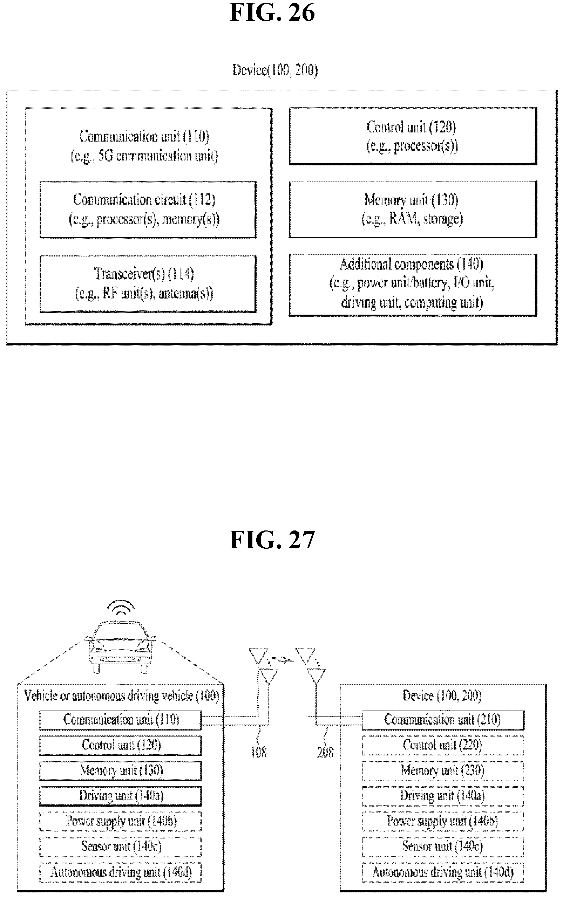

FIG. 26 illustrates another example of a wireless device applied to the present disclosure. The wireless device may be implemented in various forms according to a use-case/service (refer to FIG. 24)

Referring to FIG. 26, wireless devices 100 and 200 may correspond to the wireless devices 100 and 200 of FIG. 25 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 27. For example, the transceiver(s) 114 may include the one or more transceivers 106 and 206 and/or the one or more antennas 108 and 208 of FIG. 25. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 24), the vehicles (100b-1 and 100b-2 of FIG. 24), the XR device (100c of FIG. 24), the hand-held device (100d of FIG. 24), the home appliance (100e of FIG. 24), the IoT device (100f of FIG. 24), a digital broadcast terminal, a hologram device, a public safety device, an MTC device, a medicine device, a fintech device (or a finance device), a security device, a climate/environment device, the AI server/device (400 of FIG. 24), the BSs (200 of FIG. 24), a network node, etc. The wireless device may be used in a mobile or fixed place according to a use-example/service.

In FIG. 26, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (100, 200) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (100, 200) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (100, 200) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

FIG. 27 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 27, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 26, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the disclosure should be determined by the appended claims not by the above description, and all changes coming within the meaning and scope of the appended claims are intended to be embraced therein.

The present disclosure may be applied to devices operating in wireless mobile communication systems.

**Claims**

1.     An operation method for a first user equipment device in a wireless communication system, the method comprising:

transmitting configuration information for direct device-to-device communication to a second user equipment device; and
receiving a message including a header and a payload from the second device,
wherein the header includes an extension flag field including a plurality of bits and extension data fields, each of which corresponds to a data type identified by the extension flag field, and
wherein a transmission period of a message related to the second device is adjusted based on information on a Quality of Service , OoS, priority level of the second device included in the header.

2.     The method of claim 1, wherein the QoS priority level of the second device is determined based on at least one of a risk level of a zone in which the second device is located, a distance from the second device to a road, or an intensity of a signal generated in a vicinity of the second device.

3. The method of claim 2, wherein the risk level of the zone in which the second device is located is determined based on a predetermined priority map, and
wherein the priority map includes information on a plurality of zones divided based on at least one of a number of driving vehicles and a frequency of occurrence of accidents.

4. The method of claim 2 or 3, wherein one or more thresholds are configured based on the distance to the road, and wherein the QoS priority level of the second device is determined based on a result of comparing the one or more thresholds with the distance from the second device to the road.

5. The method of any one of claims 2 to 4, wherein the intensity of the signal generated in the vicinity of the second device includes at least one of an intensity of a voice signal in a frequency band generated in a vehicle or an intensity of a radio signal in a frequency band used in the device-to-device communication.

6. The method of claim 5, wherein the QoS priority level of the second device is determined based on a result of comparing the intensity of the signal with one or more predetermined thresholds.

7. The method of any one of claims 1 to 6, wherein one bit among the plurality of bits is a bit for identifying a presence of the information on the QoS priority level of the second device, and
wherein an extension data field corresponding to the one bit indicates a value of the QoS priority level of the second device.

8. The method of any one of claims 1 to 7, wherein each of the plurality of bits indicates a different data type, and wherein a number of extension data fields included in the header is equal to a number of data types identified based on values of the plurality of bits.

9. The method of any one of claims 1 to 8, wherein the data type identified by the extension flag field includes the QoS priority level of the second device,

10. The method of any one of claims 1 to 9, wherein a transmission period of a message transmitted between the first device and the second device is adjusted based on the information on the QoS priority level of the second device.

11. The method of any one of claims 1 to 10, further comprising:

    checking a QoS status of a network; and
    transmitting a threshold level for adjusting the transmission period of the message to the second device based on the QoS status of the network being lower than or equal to a predetermined level.

12. The method of any one of claims 1 to 11, wherein the header further includes an additional extension flag field, and the extension flag field further includes a bit indicating a presence of the additional extension flag field.

13. A first user equipment device configured to operate in a wireless communication system, the first device comprising:

    at least one radio frequency, RF, unit;
    at least one processor; and
    at least one computer memory operably connected to the at least one processor and configured to, when executed, cause the at least one processor to perform operations according to any one of claims 1 to 12.

14. An operation method for a second user equipment device in a wireless communication system, the method comprising:

    receiving configuration information for direct device-to-device communication from a first user equipment device; and
    transmitting a message including a header and a payload to the first device,
    wherein the header includes an extension flag field including a plurality of bits and extension data fields, each of which corresponds to a data type identified by the extension flag field, and
    wherein a transmission period of a message related to the second device is adjusted based on information on a Quality of Service , Qos, priority level of the second device included in the header.

15. A second user equipment device configured to operate in a wireless communication system, the second device comprising:

at least one radio frequency, RF, unit;
at least one processor; and
at least one computer memory operably connected to the at least one processor and configured to, when executed, cause the at least one processor to perform operations according to claim 14.

**Patentansprüche**

1. Betriebsverfahren für eine erste Benutzergerätvorrichtung in einem drahtlosen Kommunikationssystem, wobei das Verfahren umfasst:

Übertragen von Konfigurationsinformationen für eine direkte Vorrichtung-zu-Vorrichtung-Kommunikation an eine zweite Benutzergerätvorrichtung; und
Empfangen einer Nachricht, die einen Header und eine Nutzlast enthält, von der zweiten Vorrichtung,
wobei der Header ein Erweiterungsflag-Feld mit einer Mehrzahl von Bits und Erweiterungsdatenfelder enthält, von denen jedes einem durch das Erweiterungsflag-Feld identifizierten Datentyp entspricht, und
wobei eine Übertragungsdauer einer Nachricht, die sich auf die zweite Vorrichtung bezieht, auf der Grundlage von Informationen über ein Dienstgüte-, QoS-, Prioritätsniveau der zweiten Vorrichtung, das im Header enthalten ist, angepasst wird.

2. Verfahren nach Anspruch 1, wobei das QoS-Prioritätsniveau der zweiten Vorrichtung auf der Grundlage mindestens eines der Folgenden bestimmt wird: eines Risikoniveaus einer Zone, in der sich die zweite Vorrichtung befindet, einer Entfernung der zweiten Vorrichtung zu einer Straße oder einer Intensität eines in einer Nähe der zweiten Vorrichtung erzeugten Signals.

3. Verfahren nach Anspruch 2, wobei das Risikoniveau der Zone, in der sich die zweite Vorrichtung befindet, auf der Grundlage einer vorbestimmten Prioritätskarte bestimmt wird, und
wobei die Prioritätskarte Informationen über eine Mehrzahl von Zonen enthält, die auf der Grundlage mindestens eines der Folgenden unterteilt sind: einer Anzahl von fahrenden Fahrzeugen und einer Häufigkeit eines Auftretens von Unfällen.

4. Verfahren nach Anspruch 2 oder 3, wobei ein oder mehrere Schwellenwerte auf der Grundlage der Entfernung zur Straße konfiguriert werden, und
wobei das QoS-Prioritätsniveau der zweiten Vorrichtung auf der Grundlage eines Ergebnisses eines Vergleichs des einen oder der mehreren Schwellenwerte mit der Entfernung von der zweiten Vorrichtung zur Straße bestimmt wird.

5. Verfahren nach einem der Ansprüche 2 bis 4, wobei die Intensität des in der Nähe der zweiten Vorrichtung erzeugten Signals mindestens eine einer Intensität eines in einem Fahrzeug erzeugten Sprachsignals in einem Frequenzband oder einer Intensität eines in der Vorrichtung-zu- Vorrichtung-Kommunikation verwendeten Funksignals in einem Frequenzband umfasst.

6. Verfahren nach Anspruch 5, wobei das QoS-Prioritätsniveau der zweiten Vorrichtung auf der Grundlage eines Ergebnisses eines Vergleichs der Intensität des Signals mit einem oder mehreren vorgegebenen Schwellenwerten bestimmt wird.

7. Verfahren nach einem der Ansprüche 1 bis 6, wobei ein Bit aus der Mehrzahl von Bits ein Bit zum Identifizieren eines Vorhandenseins der Informationen über das QoS-Prioritätsniveau der zweiten Vorrichtung ist, und
wobei ein diesem einen Bit entsprechendes Erweiterungsdatenfeld einen Wert des QoS-Prioritätsniveaus der zweiten Vorrichtung angibt.

8. Verfahren nach einem der Ansprüche 1 bis 7, wobei jedes der Mehrzahl von Bits einen anderen Datentyp angibt, und
wobei eine Anzahl von im Header enthaltenen Erweiterungsdatenfeldern gleich einer Anzahl von Datentypen ist, die auf der Grundlage von Werten der Mehrzahl von Bits identifiziert werden.

9. Verfahren nach einem der Ansprüche 1 bis 8, wobei der durch das Erweiterungsflag-Feld identifizierte Datentyp das QoS-Prioritätsniveau der zweiten Vorrichtung umfasst.

10. Verfahren nach einem der Ansprüche 1 bis 9, wobei eine Übertragungsdauer einer zwischen der ersten Vorrichtung und der zweiten Vorrichtung übertragenen Nachricht auf der Grundlage der Informationen über das QoS-Prioritätsniveau der zweiten Vorrichtung angepasst wird.

11. Verfahren nach einem der Ansprüche 1 bis 10, ferner umfassend:

Überprüfen eines QoS-Status eines Netzwerks; und
Übertragen eines Schwellenwertniveaus zum Anpassen der Übertragungsdauer der Nachricht an die zweite Vorrichtung, basierend darauf, dass der QoS-Status des Netzwerks kleiner oder gleich einem vorbestimmten Niveau ist.

12. Verfahren nach einem der Ansprüche 1 bis 11, wobei der Header ferner ein zusätzliches Erweiterungsflag-Feld enthält, und
das Erweiterungsflag-Feld ferner ein Bit enthält, das ein Vorhandensein des zusätzlichen Erweiterungsflag-Feldes anzeigt.

13. Erste Benutzergerätvorrichtung, die für den Betrieb in einem drahtlosen Kommunikationssystem konfiguriert ist, wobei die erste Vorrichtung umfasst:

mindestens eine Funkfrequenz-, RF-, Einheit;
mindestens einen Prozessor; und
mindestens einen Computerspeicher, der funktionsfähig mit dem mindestens einen Prozessor verbunden und so konfiguriert ist, dass er bei Ausführung den mindestens einen Prozessor veranlasst, Operationen gemäß einem der Ansprüche 1 bis 12 durchzuführen.

14. Betriebsverfahren für eine zweite Benutzergerätvorrichtung in einem drahtlosen Kommunikationssystem, wobei das Verfahren umfasst:

Empfangen von Konfigurationsinformationen für eine direkte Vorrichtung-zu-Vorrichtung-Kommunikation von einer ersten Benutzergerätvorrichtung; und
Übertragen einer Nachricht, die einen Header und eine Nutzlast enthält, an die erste Vorrichtung,
wobei der Header ein Erweiterungsflag-Feld mit einer Mehrzahl von Bits und Erweiterungsdatenfelder enthält, von denen jedes einem durch das Erweiterungsflag-Feld identifizierten Datentyp entspricht, und
wobei eine Übertragungsdauer einer Nachricht, die sich auf die zweite Vorrichtung bezieht, auf der Grundlage von Informationen über ein Dienstgüte-, QoS-, Prioritätsniveau der zweiten Vorrichtung, das im Header enthalten ist, angepasst wird.

15. Zweite Benutzergerätvorrichtung, die für den Betrieb in einem drahtlosen Kommunikationssystem konfiguriert ist, wobei die zweite Vorrichtung umfasst:

mindestens eine Funkfrequenz-, RF-, Einheit;
mindestens einen Prozessor; und
mindestens einen Computerspeicher, der funktionsfähig mit dem mindestens einen Prozessor verbunden und so konfiguriert ist, dass er bei Ausführung den mindestens einen Prozessor veranlasst, Operationen gemäß Anspruch 14 durchzuführen.

**Revendications**

1. Procédé de fonctionnement d'un premier équipement utilisateur dans un système de communication sans fil, le procédé comprenant :

la transmission d'informations de configuration pour une communication directe de dispositif à dispositif à un deuxième équipement utilisateur ; et
la réception d'un message comprenant un en-tête et une charge utile provenant du deuxième appareil,

dans lequel l'en-tête comprend un champ Indicateur d'extension y compris plusieurs bits et des champs Données d'extension, chacun d'entre eux correspondant à un type de données identifié par le champ Indicateur d'extension, et

dans lequel la période de transmission d'un message concernant le deuxième dispositif est ajustée en fonction des informations relatives au niveau de priorité de qualité de service, QoS, du deuxième dispositif, incluses dans l'en-tête.

2. Procédé selon la revendication 1, dans lequel le niveau de priorité de QoS, du deuxième dispositif est déterminé en fonction d'au moins l'un élément parmi un niveau de risque d'une zone dans laquelle se trouve le deuxième dispositif, une distance entre le deuxième dispositif et une route, ou une intensité d'un signal généré à proximité du deuxième dispositif.

3. Procédé selon la revendication 2, dans lequel le niveau de risque de la zone dans laquelle se trouve le deuxième dispositif est déterminé sur la base d'une carte de priorités prédéfinie, et

dans lequel la carte de priorités comprend des informations sur une pluralité de zones divisées en fonction, au moins, d'un élément parmi un certain nombre de véhicules en circulation et la fréquence des accidents.

4. Procédé selon la revendication 2 ou 3, dans lequel un ou plusieurs seuils sont configurés en fonction de la distance par rapport à la route, et

dans lequel le niveau de priorité de QoS du deuxième dispositif est déterminé en fonction du résultat d'une comparaison entre le ou les seuils et la distance séparant le deuxième dispositif de la route.

5. Procédé selon l'une quelconque des revendications 2 à 4, dans lequel l'intensité du signal généré à proximité du deuxième dispositif comprend au moins un élément parmi l'intensité d'un signal vocal dans une bande de fréquences généré dans un véhicule ou l'intensité d'un signal radio dans une bande de fréquences utilisée pour la communication de dispositif à dispositif.

6. Procédé selon la revendication 5, dans lequel le niveau de priorité de QoS du deuxième appareil est déterminé à partir du résultat d'une comparaison entre l'intensité du signal et un ou plusieurs seuils prédéfinis.

7. Procédé selon l'une quelconque des revendications 1 à 6, dans lequel un bit parmi la pluralité des bits est un bit servant à indiquer la présence des informations sur le niveau de priorité de QoS du deuxième dispositif, et

dans lequel un champ Données d'extension correspondant audit bit indique une valeur du niveau de priorité de QoS du deuxième dispositif.

8. Procédé selon l'une quelconque des revendications 1 à 7, dans lequel chaque bit de la pluralité des bits indique un type de données différent, et

dans lequel le nombre de champs Données d'extension inclus dans l'en-tête est égal au nombre de types de données identifiés en fonction des valeurs de la pluralité de bits.

9. Procédé selon l'une quelconque des revendications 1 à 8, dans lequel le type de données identifié par le champ Indicateur d'extension comprend le niveau de priorité de QoS du deuxième dispositif.

10. Procédé selon l'une quelconque des revendications 1 à 9, dans lequel la durée de transmission d'un message échangé entre le premier dispositif et le deuxième dispositif est ajustée en fonction des informations relatives au niveau de priorité de QoS du deuxième dispositif.

11. Procédé selon l'une quelconque des revendications 1 à 10, comprenant en outre:

la vérification de l'état de QoS d'un réseau; et

la transmission d'un niveau seuil permettant d'ajuster la durée de transmission du message au deuxième dispositif lorsque l'état de QoS du réseau est inférieur ou égal au niveau prédéfini.

12. Procédé selon l'une quelconque des revendications 1 à 11, dans lequel l'en-tête comprend en outre un champ Indicateur d'extension supplémentaire, et

le champ Indicateur d'extension comprend en outre un bit indiquant la présence du champ Indicateur d'extension supplémentaire.

**13.** Premier équipement utilisateur configuré pour fonctionner dans un système de communication sans fil, le premier dispositif comprenant:

au mois une unité de radiofréquence, RF;
au moins un processeur; et
au moins une mémoire informatique connectée fonctionnellement à l'au moins un processeur et configurée pour, lorsqu'elle est exécutée, amener l'au moins un processeur à effectuer les opérations selon l'une quelconque des revendications 1 à 12.

**14.** Procédé de fonctionnement d'un deuxième dispositif d'équipement utilisateur dans un système de communication sans fil, le procédé comprenant:

la réception d'informations de configuration pour une communication directe de dispositif à dispositif en provenance d'un deuxième équipement utilisateur; et
la transmission d'un message comprenant un en-tête et une charge utile au premier dispositif,
dans lequel l'en-tête comprend un champ Indicateur d'extension y compris plusieurs bits et des champs Données d'extension, chacun d'entre eux correspondant à un type de données identifié par le champ Indicateur d'extension, et
dans lequel la période de transmission d'un message concernant le deuxième dispositif est ajustée en fonction des informations relatives au niveau de priorité de qualité de service, QoS, du deuxième dispositif, incluses dans l'en-tête.

**15.** Deuxième dispositif d'équipement utilisateur configuré pour fonctionner dans un système de communication sans fil, le deuxième dispositif comprenant:

au moins une unité de radiofréquence, RF;
au moins un processeur; et
au moins une mémoire d'ordinateur couplée fonctionnellement à l'au moins un processeur et configuré pour, lorsqu'elle est exécutée, amener l'au moins un processeur à effectuer les opérations selon la revendication 14.

# FIG. 1

Evolution to 5G,
while maintaining backward compatibility

Advanced use cases
5G V2X R16

Enhanced safety
C-V2X R14/15

Higher throughput    Wideband raging
Higher reliability      and positioning
Lower latency

Basic safety
802.11p or C-V2X R14

Enhanced range and reliability

Vehicle
Platooning

Extended
Sensors

Remote
Driving

Advanced
Driving

# FIG. 2

# FIG. 3

# FIG. 4

| One Frame (10ms) |
|---|

| Half-Frame (5ms) | Half-Frame (5ms) |
|---|---|

| Subframe 0 (1ms) | ... | Subframe 4 (1ms) | Subframe 5 (1ms) | ... | Subframe 9 (1ms) |
|---|---|---|---|---|---|

Subframe (1ms)

| 15KHz | Slot 0 (14symbols) |
|---|---|

1ms

| 30KHz | Slot 0 (14symbols) | Slot 1 |
|---|---|---|

500us

| 60KHz | Slot 0 (14symbols) | Slot 1 | Slot 2 | Slot 3 |
|---|---|---|---|---|

250us

| 120KHz | Slot 0 (14symbols) | Slot 1 | Slot 2 | Slot 3 | Slot 4 | Slot 5 | Slot 6 | Slot 7 |
|---|---|---|---|---|---|---|---|---|

125us

# FIG. 5

Resource grid

A carrier
(up to 3300 subcarriers, i. e., 275 RBs)

A BWP

1 RB = 12 subcarriers

1 RE

1 subcarrier

1 symbol

l=0 · · · · ·

k=0

# FIG. 6

PU5-U

(a)

PU5-U

(b)

# FIG. 7

BS (e.g. eNB or gNB)

UE1                    UE2

# FIG. 8

Frequency

| Unit<br>#($N_F$-1) | Unit<br>#(2$N_F$-1) | | Unit<br>#($N_F$*$N_T$-1) | Unit<br>#($N_F$-1) |
|---|---|---|---|---|
| : | : | | : | : |
| Unit<br>#1 | Unit<br>#($N_F$+1) | | Unit<br>#($N_F$*$N_T$-$N_F$+1) | Unit<br>#1 |
| Unit<br>#0 | Unit<br>#$N_F$ | ... | Unit<br>#($N_F$*$N_T$-$N_F$) | Unit<br>#0 |

Time

D2D signal transmission
from a UE allocated with unit #0

D2D signal transmission
from a UE allocated with unit #0

# FIG. 9

Applications

MA    FA    SA

MF    Facilities    SF

NF

MN    Network & Transport    SN

IN

MI    Access    SI

Management

Security

# FIG. 10

C-V@X (LTE-V2X) in EU

C-V@X (LTE-V2X) in US

# FIG. 11

# FIG. 12

(a)

(b)

## FIG. 13

MQTT Payload

| V2N Header | V2N Payload(V2X message) |
|---|---|

| Message Type(1B) | ExtensionFlag (1B) | ExtensionData1 (NB) | ..... | ExtensionData8 (NB) |
|---|---|---|---|---|

| Message Type | data |
|---|---|
| SoftV2X message (BSM) | 1 |
| SoftV2X message (PSM) | 2 |
| Filering Control Data | 3 |
| reserved | 4 |
| reserved | 5 |
| reserved | 6 |
| reserved | 7 |
| reserved | 8 |

| Extension Type | bit |
|---|---|
| Direction | 1 |
| Z-level | 2 |
| LaneID | 3 |
| QoS level | 4 |
| reserved | 5 |
| reserved | 6 |
| reserved | 7 |
| ExtraExtensionFlag | 8 |

## FIG. 14

FIG. 15

FIG. 16

**FIG. 17**

| V2N Header | V2N Payload |
|---|---|

| Message Type (1B) | ExtensionFlag (1B) | | | | | | | | ExtensionData4 (1B) | SoftV2N Payload |
|---|---|---|---|---|---|---|---|---|---|---|
| 1=SoftV2X | 0 | 0 | 0 | 0 | 1 | 0 | 0 | 0 | 3 = LowRisk | PSM |

| Extension Flag | data |
|---|---|
| Direction | 1 |
| Z-level | 2 |
| Device Type | 3 |
| QoS level | 4 |
| AggregationIndicator | 5 |
| AdditionalData | 6 |
| reserved | 7 |
| ExtraExtensionFlag | 8 |

| Layer Type | Value |
|---|---|
| High Risk | 1 |
| Risk | 2 |
| Low Risk | 3 |
| No Risk | 4 |

EP 4 425 973 B1

# FIG. 18

Fig a) Uplink transmission of QoS Uplink control

Fig b) Downlink transmission of QoS Uplink control

# FIG. 19

# FIG. 20

Fig a) Uplink transmission of QoS Uplink control

Fig b) Downlink transmission of QoS Uplink control

EP 4 425 973 B1

# FIG. 21

# FIG. 22

```
        ( Start )
            │
            ▼
┌──────────────────────────────────┐
│ Transmtiting configuration information │ ─── S2200
│   for device-to-device communication   │
└──────────────────────────────────┘
            │
            ▼
┌──────────────────────────────────┐
│     Receiving  message  including      │ ─── S2210
│        header  and payload             │
└──────────────────────────────────┘
            │
            ▼
         ( End )
```

# FIG. 23

```
        ( Start )
            │
            ▼
┌──────────────────────────────────┐
│  Receiving configuration information   │ ─── S2300
│   for device-to-device communication   │
└──────────────────────────────────┘
            │
            ▼
┌──────────────────────────────────┐
│    Transmtiting message  including     │ ─── S2310
│        header  and payload             │
└──────────────────────────────────┘
            │
            ▼
         ( End )
```

# FIG. 24

# FIG. 25

# FIG. 26

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 27

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108    208

Device (100, 200)

Communication unit (210)

Control unit (220)

Memory unit (230)

Driving unit (140a)

Power supply unit (140b)

Sensor unit (140c)

Autonomous driving unit (140d)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020259935 A1
- US 2017164070 A1
- WO 2021014411 A1